# EUROPEAN PATENT SPECIFICATION

(11) **EP 1 867 704 B1**
(45) Date of publication and mention of the grant of the patent: **15.09.2010**
(21) Application number: 06729178.1
(22) Date of filing: 15.03.2006
(51) Int. Cl.: C10M 171/00, C10M 105/36, C10M 105/38, C10M 105/70, C10M 105/72, C10M 105/74, C10M 105/78, C09D 7/12, C09D 201/00, C09K 3/00, B05D 5/08, B05D 7/02, B05D 7/24, C08J 7/04, C08J 7/06, C10N 30/00, C10N 30/06, C10N 40/02, C10N 40/36, C10N 50/02

(54) **SURFACE TREATMENT METHOD USING DISC-LIKE COMPOUND, (LUBRICATING) COMPOSITION FOR SURFACE TREATMENT, AND SURFACE-TREATED ARTICLE**
OBERFLÄCHENBEHANDLUNGSVERFAHREN UNTER VERWENDUNG EINER SCHEIBENARTIGEN VERBINDUNG, (SCHMIER)ZUSAMMENSETZUNG ZUR OBERFLÄCHENBEHANDLUNG UND OBERFLÄCHENBEHANDELTER GEGENSTAND
METHODE DE TRAITEMENT DE SURFACE UTILISANT UN COMPOSE EN FORME DE DISQUE, COMPOSITION (LUBRIFIANTE) POUR TRAITEMENT DE SURFACE, ET ARTICLE A SURFACE TRAITEE

(30) Priority: 15.03.2005 JP 2005073285; 15.03.2005 JP 2005073286
(43) Date of publication of application: 19.12.2007
(73) Proprietor: FUJIFILM Corporation, Minato-ku Tokyo 106-0031 (JP)
(72) Inventor: NEGORO, Masayuki c/o Fujifilm Corporation, Kanagawa 2500193 (JP); KAWATA, Ken c/o Fujifilm Corporation, Kanagawa 2500193 (JP)
(74) Representative: HOFFMANN EITLE
(86) International application number: PCT/JP2006/305157
(87) International publication number: WO 2006/098380

(56) References cited:
- EP-A- 1 266 950
- WO-A-03/023506
- JP-A- 04 132 795
- JP-A- 50 090 858
- JP-A- 57 117 597
- JP-A- 60 099 200
- JP-A- 60 136 033
- JP-A- 2002 069 472
- JP-A- 2003 064 389
- JP-A- 2003 064 390
- JP-A- 2003 192 677
- JP-A- 2004 331 950
- JP-A- 2005 047 880
- JP-A- 2005 120 172
- JP-A- 2006 089 672
- JP-A- 2006 117 928
- US-A- 5 853 801
- US-A1- 2004 266 633

## Description

### TECHNICAL FIELD

The present invention relates to a surface treatment method capable of providing a sliding ability, wear-resistance, lubricating ability, water-repellent property releasing ability and so forth to articles, a composition to be used in the method, and articles surface-treated according to the method.

### BACKGROUND OF THE ART

As a conventional method for providing a lubricating ability to a surface, chemical treatments such as a chemical-compound treatment, solvent treatment, coupling-agent treatment, surface graft polymerization or physical treatments such as a ultra-violet light irradiation, low-temperature plasma treatment, sputtering etching treatment have been carried out, however, such methods suffer from complications of processes, non-adaptabilities for materials and inferiorities in long-term lubricating.

Performances required for lubricant relate to that it should be able to lower friction coefficient at mechanical friction sliding parts over a wide temperature range and pressure range, and that such effects are sustained as long as possible. It is also expected for the lubricant to not only improve lubricating properties between mechanical friction sliding parts, but also to thereby provide wear resistance to such friction sliding members in themselves. Effects, which are obtainable by using lubricant such as engine oil, of reducing friction coefficient of the friction sliding parts and increasing service life thereof directly result in improved fuel cost for mechanical driving, or in other words, energy saving. Extension of the service life of engine oil not only ensures reduction in waste oil but also reduction in CO₂ emission, so that it will be desirable in terms of environmental compatibility which has increasingly been attracting recent public attention. As for bearings or gears, which operate under particularly severe frictional conditions among various sliding parts for use in industrial machines, use of conventional lubricant such as lubricating oil or grease may result in film breakage or sticking of the lubricant under particularly severe lubricating conditions, which makes it difficult to obtain a desired low friction coefficient due to abrasion scars. This sometimes lowers the reliability of apparatus, and tends to increase severity of the friction conditions especially for the case that the apparatus is to be downsized, which has been one reason for preventing the apparatus from being downsized. So that there has been a strong demand for a lubricant which can bring about the effects even under severe conditions, can contribute to downsizing of the apparatus, and is excellent in energy saving property.

Lubricants which have previously been used are generally such that comprising lubricant base oil as a major component, and a lubricant-auxiliary agent such as an organic compound blended thereto. In particular, organic molybdenum compounds recently have attracted an attention as a lubricant-auxiliary agent. Organic molybdenum compounds are excellent in various properties such as wear resistance, durability under extreme pressure (load resistance) and low friction property even during operation of sliding parts of a mechanical apparatus under severe frictional conditions such as high temperature, high or low speed, high load, downsizing and weight reduction, so that the compounds have attracted a good deal of attention as a material capable of effectively exhibiting lubricating effects under a marginal lubricating condition which is higher in pressure than the fluid lubricating condition under ordinary pressure.

Although the organic molybdenum compound may exhibit an excellent lubricant effect even under a severe friction condition, it is apparently inappropriate in terms of environmental compatibility since the lubricating oil contains a considerable amount of heavy metals such as molybdenum and zinc, sulfide which can readily be oxidized to thereby produce sulfur oxide adversely affecting the lubricating oil or sliding part itself, and even affecting the environment, and phosphoric acid which undesirably eutrophicates rivers and seas. Another disadvantage relates to that molybdenum oxide/sulfide film formed on the sliding surface is gradually peeled off under friction to thereby produce a new film, so that shortage in the amount of either of organic molybdenum compound or organic zinc compound, which are source materials, may sharply lose the effect. A countermeasure of increasing the amount of such organic molybdenum compound and organic zinc compound is however undesirable since it may increase the amount of byproducts generated in the system by such peeling-off of the film, which adversely affect the sliding machinery itself, so that it is less expectable in a current situation of a system using the foregoing organic molybdenum compound to improve fuel cost through elongation of the service life of the lubricant. As described above, lubricants without any environmental toxins or pollutants such as heavy metal elements, phosphoric acid compounds and sulfide compounds, not only exhibiting excellent lubricating properties but also exhibiting such properties for a long term, have not been provided yet.

It has been known that a lubricant composition comprising a triazine-ring-containing compound as a major component has an excellent environmental compatibility or can contribute to improvement of fuel consumption due to long-life property, and that the composition exhibits properties enough to be as an extreme pressure agent, friction-coefficient-lowering agent and anti-wear additives (see Japanese Laid-Open Patent Publication No. 2002-69472. Moreover US 2004/0266633 and EP 1266950 disclose triazine-ring containing compounds and lubricating compositions with low friction coefficients comprising these triazine compounds. Lubricants have been recently required to have more various properties and higher performances with the developments of various high performance machines and with frequent use under severe conditions.

### SUMMARY OF THE INVENTION

### PROBLEMS TO BE RESOLVED BY THE INVENTION

The present invention was made in view of above mentioned problems, and one object of the invention is to provide a surface treatment method capable of retaining low friction property and antiwear on surfaces, especially sliding surfaces, of articles for a long period, in particular even under extreme pressure, and a composition to be employed the method. Another object of the invention is to provide a surface treatment method and a surface-treatment composition capable of providing a sliding ability, wear-resistance, lubricating ability, water-repellent property releasing ability and so forth to articles.

### MEANS FOR SOLVING THE PROBLEMS

The means for solving the above mentioned problems are as follows.
[1] A surface treatment method comprising
   coating at least a part of a surface of an object with a composition comprising at least one type of discotic compound, and
   applying a temperature variation to the surface which has been coated by the composition, wherein the temperature is raised stepwise thereby applying a temperature variation to the composition.
[2] The method of [1], wherein the surface coated with the composition is made of a polymer material.
[3] The method of any one of [1] or [2], wherein, a shearing force is applied to the composition simultaneously, before or after a temperature variation is applied to the composition.
[4] The method of any one of [1] to [3], wherein the at least one type of discotic compound is a compound represented by a formula (1).

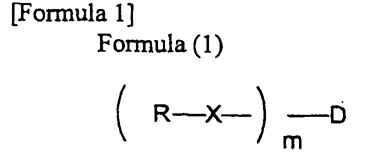

(In the formula, D represents a cyclic group capable of bonding to "m" of side chains; X respectively represents a single bond or a bivalent linking group selected from the group consisting of NR¹ (where R¹ is a hydrogen atom or a C₁₋₃₀ alkyl group), oxygen, sulfur, carbonyl, sulfonyl and any combinations thereof; R respectively represents a substituted or non-substituted, alkyl group, alkenyl group, alkynyl group, aryl group or heterocyclic group, or a halogen atom, hydroxyl, amino, mercapto, cyano, sulfide, carboxy or a salt thereof, sulfo or a salt thereof, hydroxyl amino, ureido or urethane; and m is an integer from 2 to 11).

[5] The method of [4], where D is a heterocyclic residue having a 5 to 7 membered ring structure.
[6] The method of [4] or [5], wherein the formula (1) is represented by a formula (2).

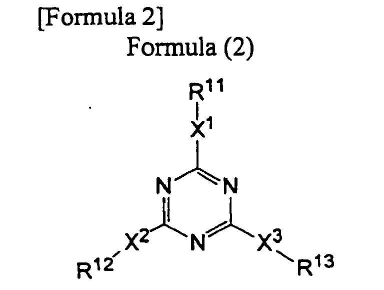

(In the formula, X¹, X² and X³ respectively represent a single bond or a bivalent linking group selected from the group consisting of NR¹ (where R¹ is a hydrogen atom or a C₁₋₃₀ alkyl group), oxygen, sulfur, carbonyl, sulfonyl and any combinations thereof; and R¹¹, R¹² and R¹³ respectively represent a substituted or non-substituted, alkyl group, alkenyl group, alkynyl group, aryl group or heterocyclic group, or a halogen atom, hydroxyl, amino, mercapto, cyano, sulfide, carboxy or a salt thereof, sulfo or a salt thereof, hydroxyl amino, ureido or urethane.)

[7] The method of any one of [4] to [6], wherein the formula (1) is represented by a formula (3).

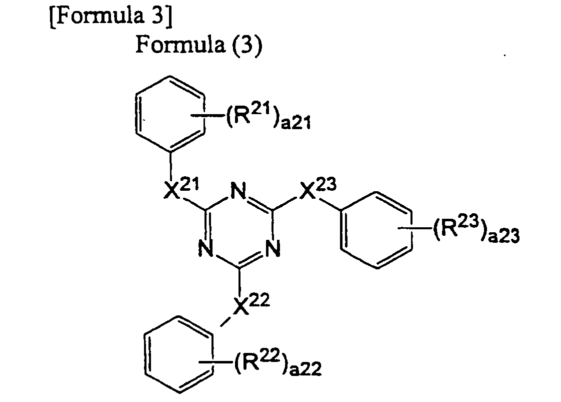

(In the formula, X²¹, X²² and X²³ respectively represent a single bond or a bivalent linking group selected from the group consisting of NR¹ (where R¹ is a hydrogen atom or a C₁₋₃₀ alkyl group), oxygen, sulfur, carbonyl, sulfonyl and any combinations thereof; R²¹, R²² and R²³ respectively represent a substituent; and a21, a22 and a23 respectively represent an integer from 1 to 5.)

[8] The method of any one of [1] to [7], for reducing at least a coefficient of friction of a surface of an object.
[9] A surface-treated article according to a method as set froth in any one of [1] to [8].

### EFFECT OF THE INVENTION

According to the surface treatment method or the surface-treatment composition of the invention, it is possible to provide a sliding ability, wear-resistance, lubricating ability, water-repellent property releasing ability and so forth to a surface of an object having any shapes. The surface of an article which is surface-treated according to the surface treatment method of the invention exhibits a high mechanical durability, and its effect is long-lasting. Therefore, the surface treatment method and the surface-treatment composition of the invention are useful for the portions such as mechanical fractioning-sliding members, sliding members, bearings, metal molds and so forth, which industrially require to be subjected to a surface treatment.

### EMBODIMENTS OF THE INVENTION

The present invention will be described in detail hereinafter. It is to be understood, in this description, that the term "... to ..." is used as meaning a range inclusive of the lower and upper values disposed therebefore and thereafter.
The present invention relates to a surface treatment method comprising coating at least a part of a surface of an object with a composition comprising at least one type of discotic compound, and applying a temperature variation to the composition. First of all, a composition to be used in the method will be described in detail.

### [Composition for Surface Treatment]

The composition to be used in the surface treatment method of the invention comprises at least one type of discotic compound. The discotic compound may be applied to a surface of an article and be applied with a temperature variation, which provides any property to the surface or contributes to improving any property of the surface. According to one embodiment, the surface treatment method is carried out in a manner that a sliding member is coated with the composition and then applied with a temperature variation, which provides the sliding member having a long-lasting low-friction property.

In the present description, the term "discotic compound" is used for any compounds having a discotic segment in the central portion of a molecule structure. The discotic segment is a central segment without side chain segments, and to use an original form thereof, namely a hydrogenised compound, as an example, the structural feature of such a central segment can be explained as follows:
A molecular size of a hydrogenised compound, which can be an original form of a discotic compound, may be obtained by 1) to 5) steps.
   1) To create a possible planar, desirably an exact planar, molecule structure for a target molecule. For creating, standard bond-length and bond-angle values based on orbital hybridization are desirably used, and such standard values can be obtained with reference to the 15th chapter in the second volume of "Chemical Handbook, revised version 4, Foundation Section (Kagaku Binran Kaitei 4 Kisohen)" compiled by The Chemical Society of Japan, published by MARUZEN in 1993.
   2) To optimize a molecular structure using the above-obtained planar structure as a default by molecular orbital method or molecular mechanics method. Examples of such methods include Gaussian92, MOPAC93, CHARMm/QUANTA and MM3, and Gaussian92 is desirably selected.
   3) To move a centroid of the optimized structure to an origin position and to create a coordinate having an axis equal to a principal axis of inertia (a principal axis of a inertia tensor ellipsoid).
   4) To set a sphere defined by van der Waals radius in each atom positions thereby drawing a molecular structure.
   5) To calculate lengths along to three coordinate axes on van der Waals surface thereby obtaining "a", "b" and "c".

Using "a", "b" and "c" obtained trough the steps 1) to 5), "a discotic structure" can be defined as a structure which satisfies a ≥b > c and a ≧ b ≧ a/2, and a preferred example of the discotic structure is a structure which satisfying a ≧ b > c and a ≧ b ≧ 0.7a or b/2 > c.

Examples of the hydrogenated compound, which can be an original form of a discotic compound, include mother cores and derivatives described in various literatures such as "Ekisho no Kagaku (Science of Liquid Crystal), edited by the Chemical Society of Japan, Seasonal Chemical Review No.22, Chapter 5, and Chapter 10, Section 2 (1994); C. Destrade et al., Mol. Crysr. Liq. Cryst., vol. 71, p. 111 (1981); B. Kohne et al., Angew. Chem. Vol. 96, p. 70; compounds described in J.M.Lehn et al., J. Chem. Soc. Chem. Commun., p. 1794(1985); and J. Zhang et al., J. Am.Chem. Soc., vol. 116, p. 2655 (1994). More specific examples of the hydrogenated compound include benzene derivatives, tri phenylene derivatives, truxene derivatives, phthalocyanine derivatives, porphyrin derivatives, anthracene derivatives hexaethynylbenzene derivatives, dibenzopyrene derivatives, coronene derivatives and phenylacetylene macrocycl derivatives. The examples also include cyclic compounds described in "Chemical Review (Kagaku Sousetsu) No. 15 Chemistry of Novel Aromatic Series (Atarashii Houkouzoku no Kagaku)" compiled by the Chemical Society of Japan, published by University of Tokyo Press in 1977; and electronic structures such as heteroatom-substituted compounds thereof.

The discotic compound is preferably selected from compounds having a cyclic group of a discotic structure and plural (preferably from 2 to 11 of) side chains bonded to the cyclic group. At least one of the side chains desirably has an ester bond therein. Especially, at least one of the side chains has a group represented by a following formula (4a) or (4b) therein. It is to be noted that the left side (-X⁰) bonds to the D side.

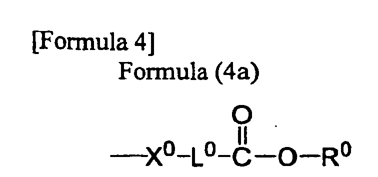

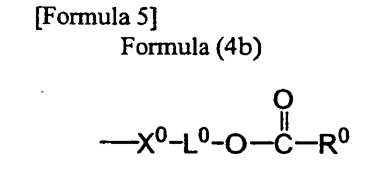

In the formulae, X⁰ represents a single bond or a bivalent linking group selected from the group consisting of NR¹ where R¹ is a hydrogen atom or C₁₋₃₀ alkyl group, oxygen, sulfur, carbonyl, sulfonyl or any combinations thereof. L⁰ represents a bivalent linking group selected from the group consisting of an alkylene group (preferably a C₁₋₂₀, linear, branched or cyclic, alkylene group), NR¹, where R¹ is a hydrogen atom or C₁₋₃₀ alkyl group, oxygen, sulfur, carbonyl, sulfonyl or any combinations thereof. The bivalent linking group may be substituted or non-substituted. L⁰ is desirably selected from alkylene groups. Preferred examples of the combination of X⁰ and L⁰ include -O(C=O)-alkylene- and -O(C=O)-cycloalkylene-.
R⁰, which is located at the end of the side chain, represents a substituted or non-substituted alkyl group or a substituted or non-substituted aryl group.

The compound is more desirably selected from the compounds in which at least one of the side chains contains the group represented by the formula (4a). Among these, at least one of the side chains contains the group represented by the formula (4) is more preferable. It is noted that the left end, namely -L⁰¹, bonds to the cyclic group.

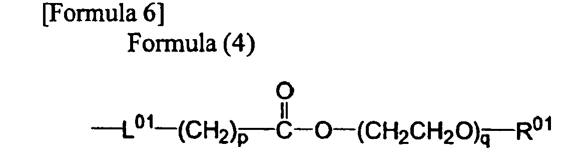

In the formula, L⁰¹ has the same meaning of X⁰. L⁰¹ is desirably selected from the group consisting of oxygen, sulfur, -(C=O)O- and -NH-(C=O)O-. R⁰¹ is a substituted or non-substituted C₁₋₃₀ alkyl group; and p and q respectively represent an integer. The number of the carbon atoms included in R⁰¹ preferably ranges from 1 to 40, and more preferably from 1 to 20. Examples of the substituent include halogen atoms, alkoxy groups such as methoxy, ethoxy, methoxyethoxy or phenoxy; sulfide groups such as methylthio, ethylthio or propylthio; alkylamino groups such as methylamino or propylamino; acyl groups such as acetyl, propanoyl, octanoyl or benzoyl; acyloxy groups such as acetoxy, pivaloyloxy or benzoyloxy; aryl groups, heterocyclic groups, hydroxyl, mercapto, amino, cyano, nitro, carboxyl, sulfo, carbamoyl, sulfamoyl and ureido. In the formula, p is desirably an integer selected from 1 to 20, and more desirably selected from 2 to 10. In the formula, q is desirably an integer selected from 1 to 10, and more desirably selected from 1 to 5.

It is also preferable that at least one of the side chains has the group represented by a formula (5) or a formula (6) therein.

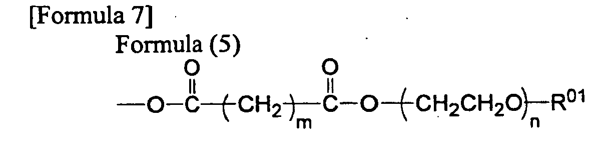

In the formula, R⁰¹ represents a substituted or non-substituted C₁₋₃₀ alkyl group; and m and n respectively represent an integer, and R⁰¹ has a same meaning of that in the formula (4).

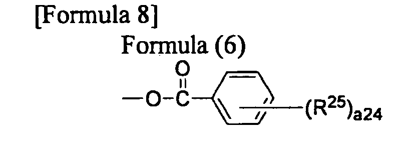

In the formula, R²⁵ represents a substituent and a24 is an integer from 1 to 5.

It is also preferable that at least one of the side chains has the group represented by a following formula (7) therein.

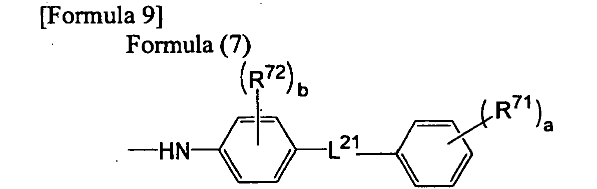

In the formula, L²¹ represents a single bond or a bivalent linking group selected from the group consisting of NR¹ (where R¹ is a hydrogen atom or C₁₋₃₀ alkyl group), oxygen, sulfur, carbonyl, sulfonyl or any combinations thereof. L²¹ preferably represents an oxygen atom, oxyalkylene, oxycarbonyl, aminocarbonyl, carbonyloxy, or carbonyl; and more preferably oxycarbonyl or carbonyl.

Examples of C₁₋₄₀, preferably C₁₋₂₀, C₂₋₄₀, more preferably C₂₋₂₀,
Examples of the substituent, represented by R²⁵, R⁷¹ or R¹², include halogen atoms, alkyl groups (C₁₋₄₀, preferably C₁₋₂₀ alkyl groups), alkenyl groups (C₂₋₄₀, preferably C₂₋₂₀ alkenyl groups), alkynyl groups (C₂₋₄₀, preferably C₂₋₂₀ alkynyl groups), aryl groups (C₆₋₄₀, preferably C₆₋₂₀ aryl groups), heterocyclic groups (C₁₋₄₀, preferably C₁₋₂₀ heterocyclic groups), cyano, hydroxy, nitro, carboxyl, alkoxy, aryloxy (C₆₋₄₀, preferably C₆₋₂₀ aryloxy groups), silyloxy groups (C₃₋₄₀, preferably C₃₋₂₀ silyloxy groups), hetero oxy groups (C₁₋₄₀, preferably C₁₋₂₀ hetero oxy groups), acyloxy groups (C₂₋₄₀, preferably C₂₋₂₀ acyloxy groups), carbamoyloxy groups (C₁₋₄₀, preferably C₁₋₂₀ carbamoyloxy groups), alkoxycarbonyloxy groups (C₂₋₄₀, preferably C₂₋₂₀ alkoxycarbonyloxy groups), aryloxycarbonyloxy groups (C₇₋₄₀, preferably C₇₋₂₀ aryloxycarbonyloxy groups), amino, acylamino groups (C₁₋₄₀, preferably C₁₋₂₀ acylamino groups), aminocarbonyl amino groups (C₁₋₄₀, preferably C₁₋₂₀ aminocarbonyl amino groups), alkoxycarbonyl amino groups (C₂₋₄₀, more preferably C₂₋₂₀ alkoxycarbonyl amino groups), aryloxycarbonyl amino groups (C₇₋₄₀, preferably C₇₋₂₀ aryloxycarbonyl amino groups), sulfamoyl amino groups (C₀₋₄₀, preferably C₀₋₂₀ sulfamoyl amino groups), alkyl- and aryl- sulfonylamino groups (C₁₋₄₀. more preferably C₁₋₂₀ alkyl- and aryl- sulfonylamino groups), mercapto, alkylthio groups (C₁₋₄₀, preferably C₁₋₂₀ alkylthio groups), arylthio groups (C₆₋₄₀, preferably C₆₋₂₀ arylthio groups), heterocyclic thio groups (C₁₋₄₀, preferably C₁₋₂₀ heterocyclic thio groups), sulfamoyl groups (C₀₋₄₀, preferably C₀₋₂₀ sulfamoyl groups), sulfo, alkyl- and aryl-sulfinyl groups (C₁₋₄₀, preferably C₁₋₂₀ alkyl- and aryl- sulfinyl groups), alkyl- and aryl-sulfonyl groups (C₁₋₄₀, preferably C₁₋₂₀ alkyl- and aryl-sulfonyl groups), acyl groups (C₁₋₄₀, preferably C₁₋₂₀ acyl groups), aryloxy carbonyl groups (C₇₋₄₀, preferably C₇₋₂₀ aryloxy carbonyl groups), alkoxycarbonyl groups (C₂₋₄₀, preferably C₂₋₂₀ alkoxycarbonyl groups), carbamoyl groups (C₁₋₄₀, preferably C₁₋₂₀ carbamoyl groups), aryl- and heterocyclic- azo groups (C₁₋₄₀, preferably C₁₋₂₀ aryl- and heterocyclic- azo groups), imido groups (C₄₋₄₀, preferably C₄₋₂₀ imido groups), phosphino groups (C₀₋₄₀, preferably C₀₋₂₀ phosphino groups), phosphinyl groups (C₀₋₄₀, preferably C₀₋₂₀ phosphinyl groups), phosphinyloxy groups (C₀₋₄₀, preferably C₀₋₂₀ phosphinyloxy groups), phosphinyl amino groups (C₀₋₄₀, preferably C₀₋₂₀ phosphinyl amino groups), and silyl groups (C₃₋₄₀, preferably C₃₋₂₀ silyl groups). The Examples of the substituent, R⁷¹ and R⁷², also include these substituents having at least one substituent selected from these substituents. The substituent represented by R⁷¹ is preferably selected from the group consisting of alkoxy groups, alkoxycarbonyl groups and acyl groups which respectively have a substituent containing a liner or branched alkyl residue. In the formula, "a" is 0 or an integer from 1 to 5, and preferably from 1 to 3.
The number of carbon atoms in R⁷¹ preferably ranges from 1 to 40, and more preferably from 1 to 20.

It is also preferable that at least one of the side chains has a partially fluorinated carbon group or a fluorocarbon group therein. The fluorocarbon may have one or more double bonds, or a branched, cyclic or aryl moiety. It is also preferable that at least one of the side chains is a group represented by a formula (8).

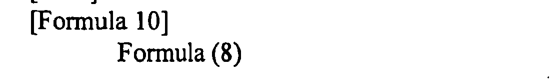

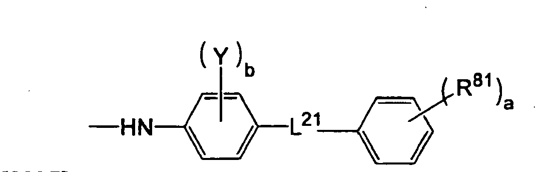

In the formula, L²¹ represents a single bond or a bivalent linking group selected from the group consisting of NR¹ (where R¹ is a hydrogen atom or C₁₋₃₀ alkyl group), alkylene group (preferably a C₁₋₂₀ linear, branched or cyclic alkylene group), oxygen, sulfur, carbonyl, sulfonyl or any combinations thereof. L²¹ preferably represents an oxygen atom, oxyalkylene, oxycarbonyl, aminocarbonyl, carbonyloxy, or carbonyl; and more preferably oxycarbonyl or carbonyl.

Examples of the substituent, R⁸¹, include halogen atoms, alkyl groups, alkenyl groups, alkynyl groups, aryl groups, heterocyclic groups, cyano, hydroxyl, nitro, carboxyl, alkoxy groups, aryloxy groups, silyloxy groups, heteroxy groups, acyloxy groups, carbamoyloxy groups, alkoxycarbonyloxy groups, aryloxycarbonyloxy groups, amino groups, acylamino groups, aminocarbonylamino groups, alkoxycarbonylamino groups, aryloxycarbonylamino groups, sulfamoylamino groups, alkyl- or aryl-sulfonylamino groups, mercapto, alkylthio groups, arylthio groups, heterocyclic-thio groups, sulfamoyl groups, sulfo, alkyl- or aryl-sulfinyl groups, alkyl- or aryl-sulfonyl groups, acyl groups, aryloxycarbonyl groups, alkoxycarbonyl groups, carbamoyl groups, aryl- or heterocyclic-azo groups, imido, phosphino, phosphinyl, phosphinyloxy, phosphinylamino and silyl. The preferred ranges of the carbon atom numbers included in these groups are same as those of the substituents R²⁵, R⁷¹ and R¹². Examples of the substituent, R⁸¹, also include these substituents having at least one substituent selected from these substituents. At least one of (R⁸¹)ₐ include a partially fluorinated carbon group or a fluorocarbon group. The fluorocarbon may have one or more double bonds, or a branched, cyclic or aryl moiety. The substituent represented by R⁸¹ is preferably selected from the group consisting of alkoxy groups, alkoxycarbonyl groups and acyl groups which respectively have a substituent containing a liner or branched alkyl residue having a partially fluorinated carbon group or a fluorinated carbon groups therein. In the formula, "a" is 0 or an integer from 1 to 5, and preferably from 1 to 3.
The number of carbon atoms in R⁸¹ preferably ranges from 1 to 40, and more preferably from 1 to 20.

The discotic compound is preferably selected from compounds represented by the following formula (1)

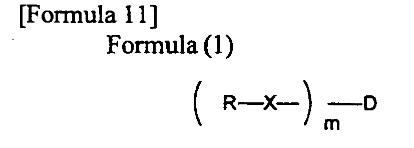

In the formula, D represents a cyclic group capable of bonding to "m" of side chains; X respectively represents a single bond or a bivalent linking group selected from the group consisting of NR¹ (where R¹ is a hydrogen atom or a C₁₋₃₀ alkyl group), oxygen, sulfur, carbonyl, sulfonyl and any combinations thereof; R respectively represents a substituted or non-substituted, alkyl group, alkenyl group, alkynyl group, aryl group or heterocyclic group, or a halogen atom, hydroxyl, amino, mercapto, cyano, sulfide, carboxy or a salt thereof, sulfo or a salt thereof, hydroxyl amino, ureido or urethane; and m is an integer from 2 to 11.

In the formula (1), examples of the cyclic group represented by D include aryl groups and heterocyclic groups. Examples of the aryl rings in the aryl group include a benzene ring, an indene ring, a naphthalene ring, a triphenylene ring, a fluorine ring, a phenanthrene ring, an anthracene ring and a pyrane ring. The aryl group may be substituted or non-substituted.
The heterocyclic group is desirably selected from 5-, 6- or 7-membered heterocyclic groups, more desirably from 5- or 6-membered heterocyclic groups, and much more desirably from 6-membered heterocyclic groups. One or more heteroatoms forming the heteroring are desirably selected from the group consisting of nitrogen, oxygen and sulfur. Aromatic heterorings are preferred. An aromatic heteroring usually belongs to unsaturated heterorings, and the heterocyclic group is more desirably selected from unsaturated heteroring groups having maximum double bondings. Examples of the heteroring include furan ring, thiophene ring, pyrrole ring, pyrroline ring, pyrrolidine ring, oxazole ring, isoxazole ring, thiazole ring, isothiazole ring, imidazole ring, imidazoline ring, imidazolidine ring, pyrazole ring, pyrazoline ring, pyrazolidine ring, triazole ring, furazan ring, tetrazole ring, pyrane ring, thyine ring, pyridine ring, piperidine ring, oxazine ring, morpholine ring, thiazine ring, pyridazine ring, pyrimidine ring, pyrazine ring, piperazine ring and triazine ring. Triazine ring is preferred and 1,3,5-triazine ring is more preferred. The heteroring may be condensed with other heteroring, or at least one aliphatic ring or aryl ring. However monocyclic heteroring groups are preferred.

In the formula (1), Xs respectively represent a single bond or a bivalent linking group selected from the group consisting of NR¹, where R¹ is a hydrogen atom or a C₁₋₃₀ alkyl group, oxygen, sulfur, carbonyl, sulfonyl and any combinations thereof. When X is a single bond, X may bond directly to nitrogen atom, having free atomic valence, of a heteroring such as a piperidine ring or may bond to a heteroatom not having free atomic valence to form an onium salt such as an oxonium salt, sulfonium salt or ammonium salt. X desirably represents a sulfur atom or NR¹, where R¹ represents a hydrogen atom or a C₃ or shorter alkyl group.

When R represents an alkyl group, the alkyl group is desirably selected from C₁₋₃₀ alkyl groups, more desirably from C₂₋₃₀ alkyl groups, much more desirably from C₄₋₃₀ alkyl groups and most desirably from C₆₋₃₀ alkyl groups. The alkyl group may have a linear or branched chain structure and may be substituted or non-substituted. Examples of the substituent group include halogen atoms, alkoxy groups such as methoxy, ethoxy, methoxyethoxy or phenoxy; sulfide groups such as methylthio, ethylthio or propylthio; alkylamino groups such as methylamino or propylamino; acyl groups such as acetyl, propanoyl, octanoyl or benzoyl; acyloxy groups such as acetoxy, pivaloyloxy or benzoyloxy; hydroxyl, mercapto, amino, carboxyl, sulfo, carbamoyl, sulfamoyl and ureido.
When R represents an alkenyl or alkynyl group, their preferred range of carbon numbers or their preferred structures are as same as those of the alkyl group. The alkenyl or alkynyl group may be non-substituted or substituted with one or more of those exemplified as the substituent group of the alkyl group.

Examples of the aryl group represented by R include phenyl, indenyl, α-naphthyl, β-naphthyl, fluorenyl, phenanthryl, anthracenyl and pyrenyl, and phenyl and naphthyl are preferred. The aryl group may be substituted or non-substituted. Examples of the substituent group include those exemplified above as a substituent group for the alkyl group, and alkyl groups. The substituent group for the aryl group is desirably selected from substituents having a C₈ or longer linear or branched alkyl group, and preferred examples of such substituent include alkyl groups such as octyl, decyl, hexadecyl or 2-ethylhexyl; alkoxy groups such as dodecyloxy or hexadecyloxy; sulfide groups such as hexadecylthio; substituted amino groups such as heptadecylamino; octylcarbamoyl, octanoyl and decylsulfamoyl. The aryl group desirably has two or more substituents selected from these. And the aryl group may also be substituted by other substituent groups such as a halogen atom, hydroxyl, cyano, nitro, carboxyl, sulfo or the like, besides the foregoing substituents.

When R represents a heterocyclic group, the heterocyclic group is preferably selected from five- to seven-membered heterocyclic groups, more preferably selected from five- or six-membered groups, and most preferably selected from six-membered groups, similarly to D. Specific examples of such skeletons can be found in heterocycles listed in "Iwanami Rikagaku Jiten (Iwanami's Physicochemical Dictionary; Iwanami Shoten, Publishers), the 3rd edition, supplement Chapter 11 "Nomenclature for Organic Chemistry", Table 4 "Names of Principal Hetero Monocyclic Compounds" on page 1606, and Table 5 "Names of Principal Condensed Heterocyclic Compounds" on page 1607. The heterocyclic groups are, similarly to the foregoing aryl group, preferably substituted with a substituent containing a C₈ or longer linear or branched alkyl chain, where substitution by two or more groups is more preferable. Specific examples of the substituent containing such chain are same as those described in the above. The heterocyclic group may also be substituted by halogen atom, hydroxyl, cyano, nitro, carboxyl, sulfo or the like, besides the foregoing substituents.

It is preferable that at least one of R contains an ester bond, and is more preferable that at least one of R is an alkoxy group which has a substituent containing a liner or branched alkyl residue having an ester bond therein. It is much more preferable that all of R contain an ester bond, and is still much more preferable that each of all R is an alkoxy group which has a substituent containing a liner or branched alkyl residue having an ester bond therein. Namely, it is preferable that at least one of R contains a segment represented by the formula (4a) or (4b), and is more preferable that at least one of R contains a segment represented by any one of the formulae (4) to (6).
It is also preferable that at least one of R-X- is the group represented by the formula (7) or (8), and is more preferable that each of all R-X- is the group represented by the formula (7) or (8).

Among compounds represented by the formula (1), the compounds represented by the following formula (2) are preferred.

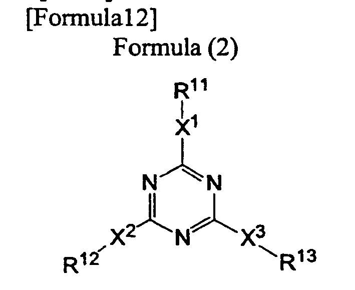

In the formula, X¹, X² and X³ respectively represent a single bond or a bivalent linking group selected from the group consisting of NR¹ (where R¹ is a hydrogen atom or a C₁₋₃₀ alkyl group), oxygen, sulfur, carbonyl, sulfonyl and any combinations thereof. When X¹, X² or X³ represents a single bond, they may bond directly to nitrogen atom, having free atomic valence, of a heteroring such as a piperidine ring, or may bond to a heteroatom not having free atomic valence to form an onium salt such as an oxonium salt, sulfonium salt or ammonium salt. On the other hand, when X¹, X² or X³ is not a single bond, they respectively represent a bivalent inking group selected from the group consisting of NR¹, where R¹ is a hydrogen atom or a C₁₋₃₀ alkyl group, oxygen, sulfur, carbonyl, sulfonyl and any combinations thereof, and examples of such bivalent linking group include oxycarbonyl, aminocarbonyl, ureylene, oxysulfonyl and sulfamoyl. Sulfur or NR¹, where R¹ is a hydrogen atom or a C₃ or shorter alkyl group, is preferred, and imino, -NH-, is more preferred.

In the formula (2), R¹¹, R¹² and R¹³ respectively represent a substituted or non-substituted alkyl group, alkenyl group, alkynyl group, aryl group or heterocyclic group, or a halogen atom, hydroxyl, amino, mercapto, cyano, sulfide, carboxy or a salt thereof, sulfo or a salt thereof, hydroxyl amino, ureido or urethane.

The alkyl group represented by R¹¹, R¹² or R¹³ has carbon atoms ranging from 1 to 30, preferably from 2 to 30, more preferably from 4 to 30, and most preferably from 6 to 30. The alkyl group may have a linear or branched chain structure. And the alkyl may have at least one substituent. Examples of the substituent include halogen atoms, alkoxy groups such as methoxy, ethoxy, methoxyethoxy or phenoxy; sulfide groups such as methylthio, ethylthio or propylthio; alkylamino groups such as methylamino or propylamino; acyl groups such as acetyl, propanoyl, octanoyl or benzoyl; acyloxy groups such as acetoxy, pivaloyloxy or benzoyloxy; hydroxyl, mercapto, amino, carboxyl, sulfo, carbamoyl, sulfamoyl and ureido. When R¹¹, R¹² or R¹³ represents an alkenyl or alkynyl group, their preferred range of carbon numbers or their preferred structures are as same as those of the alkyl group. The alkenyl or alkynyl group may be substituted or non-substituted with one or more of those exemplified as the substituent group of the alkyl group.

Examples of the aryl group represented by R¹¹, R¹² or R¹³ include phenyl, indenyl, α-naphthyl, β-naphthyl, fluorenyl, phenanthryl, anthracenyl and pyrenyl, and phenyl and naphthyl are preferred. It is preferable that the aryl group has a substituent selected from substituents having a C₈ or longer linear or branched alkyl residue, and preferred examples of such substituent include alkyl groups such as octyl, decyl, hexadecyl or 2-ethylhexyl; alkoxy groups such as dodecyloxy, hexadecyloxy, 2-hexyldecyloxy or hexyloxyethyleneoxyethyleneoxy; sulfide groups such as hexadecylthio; substituted amino groups such as heptadecylamino; octylcarbamoyl, octanoyl and decylsulfamoyl. The aryl group desirably has tow or more substituent groups selected from these. And the aryl group may also be substituted by other substituent groups such as a halogen atom, hydroxyl, cyano, nitro, carboxyl, sulfo or the like, besides the foregoing substituents.

When R¹¹, R¹² or R¹³ represents a heterocyclic group, the heterocyclic group is preferably selected from five- to seven-membered heterocyclic groups, more preferably selected from five- or six-membered groups, and most preferably selected from six-membered groups, similarly to D. Specific examples of such skeletons can be found in heterocycles listed in "Iwanami Rikagaku Jiten (Iwanami's Physicochemical Dictionary; Iwanami Shoten, Publishers), the 3rd edition, supplement Chapter 11 "Nomenclature for Organic Chemistry", Table 4 "Names of Principal Hetero Monocyclic Compounds" on page 1606, and Table 5 "Names of Principal Condensed Heterocyclic Compounds" on page 1607. The heterocyclic groups are, similarly to the foregoing aryl group, preferably substituted with a substituent containing a C₈ or longer linear or branched alkyl chain, where substitution by two or more groups is more preferable. Specific examples of the substituent containing such chain are same as those described in the above. The heterocyclic group may also be substituted by halogen atom, hydroxyl, cyano, nitro, carboxyl, sulfo or the like, besides the foregoing substituents.

It is preferable that at least one of R¹¹, R¹² and R¹³ contains an ester bond, and is more preferable that at least one of R¹¹, R¹² and R¹³ is an alkoxy group which has a substituent containing a liner or branched alkyl residue having an ester bond therein. It is much more preferable that all of one of R¹¹, R¹² and R¹³ contain an ester bond, and is still much more preferable that each of all one of R¹¹, R¹² and R¹³ is an alkoxy group which has a substituent containing a liner or branched alkyl residue having an ester bond therein. Namely, it is preferable that at least one of R¹¹, R¹² and R¹³ contains a segment represented by the formula (4a) or (4b), and is more preferable that at least one of R¹¹, R¹² and R¹³ contains a segment represented by any one of the formulae (4) to (6).
It is also preferable that at least one of R¹¹-X¹-, R¹²-X²- and R¹³-X³-R-X- is the group represented by the formula (7) or (8), and is more preferable that each of all R¹¹-X¹-, R¹²-X²- and R¹³-X³- is the group represented by the formula (7) or (8).

Among the compounds represented by the formula (2), the compounds represented by the following formula (3) are preferred.

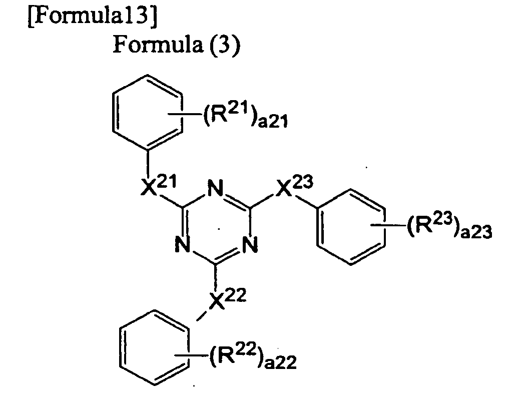

In the formula, X²¹, X²² and X²³ respectively represent a single bond or a bivalent linking group selected from the group consisting of NR¹ (where R¹ is a hydrogen atom or a C₁₋₃₀ alkyl group), oxygen, sulfur, carbonyl, sulfonyl and any combinations thereof. When X²¹, X²² or X²³ represents a single bond, they may bond directly to nitrogen atom, having free atomic valence, of a heteroring such as a piperidine ring, or may bond to a heteroatom not having free atomic valence to form an onium salt such as an oxonium salt, sulfonium salt or ammonium salt. On the other hand, when X²¹, X²² or X²³ is not a single bond, they respectively represent a bivalent inking group selected from the group consisting of NR¹, where R¹ is a hydrogen atom or a C₁₋₃₀ alkyl group, oxygen, sulfur, carbonyl, sulfonyl and any combinations thereof, and examples of such bivalent linking group include oxycarbonyl, aminocarbonyl, ureylene, oxysulfonyl or sulfamoyl. X²¹, X²² or X²³ is preferably sulfur or NR¹, where R¹ is a hydrogen atom or a C₃ or shorter alkyl group, and more preferably imino, -NH-.

In the formula R²¹, R²² and R²³ respectively represent a substituent. Examples of the substituent group represented by R²¹, R²² and R²³ include halogen atoms, alkyl groups, alkenyl groups, alkynyl groups, aryl groups, heterocyclic groups, cyano, hydroxyl, nitro, carboxyl, alkoxy groups, aryloxy groups, silyloxy groups, heteroxy groups, acyloxy groups, carbamoyloxy groups, alkoxycarbonyloxy groups, aryloxycarbonyloxy groups, amino groups, acylamino groups, aminocarbonylamino groups, alkoxycarbonylamino groups, aryloxycarbonylamino groups, sulfamoylamino groups, alkyl- or aryl-sulfonylamino groups, mercapto, alkylthio groups, arylthio groups, heterocyclic-thio groups, sulfamoyl groups, sulfo, alkyl- or aryl-sulfinyl groups, alkyl- or aryl-sulfonyl groups, acyl groups, aryloxycarbonyl groups, alkoxycarbonyl groups, carbamoyl groups, aryl- or heterocyclic-azo groups, imido, phosphino, phosphinyl, phosphinyloxy, phosphinylamino and silyl. The preferred ranges of the carbon atom numbers included in these substituents are same as those of the substituent, R²⁵, R⁷¹ and R⁷² . Examples of the substituent group represented by R²¹, R²² or R²³ also include those substituent groups substituted by at least one of the above exemplified substituent groups.

It is preferable that at least one of R²¹, R²² and R²³ contains an ester bond, and is more preferable that at least one of R²¹, R²² and R²³ is an alkoxy group which has a substituent containing a liner or branched alkyl residue having an ester bond therein. It is much more preferable that all of one of R²¹, R²² and R²³ contain an ester bond, and is still much more preferable that each of all one of R²¹, R²² and R²³ is an alkoxy group which has a substituent containing a liner or branched alkyl residue having an ester bond therein. Namely, it is preferable that at least one of R²¹, R²² and R²³ contains a segment represented by the formula (4a) or (4b), and is more preferable that at least one of R²¹, R²² and R²³ contains a segment represented by any one of the formulae (4) to (6).
It is also preferable that at least one of (R²¹)ₐ₂₁-Ph-X²¹-, (R²²)ₐ₂₂-Ph-X²²- and (R²³)ₐ₂₃-Ph-X²³-R¹¹-X¹- is the group represented by the formula (7) or (8), and is more preferable that each of all (R²¹)ₐ₂₁-Ph-X²¹-, (R²²)ₐ₂₂Ph-X²²- and (R²³)ₐ₂₃-Ph-X²³-R¹¹-X¹- is the group represented by the formula (7) or (8).

In the formula, a21, a22 and a23 is respectively a integer ranging from 1 to 5.

Examples of the compound represented by the formula (1), which can be used in the present invention, include, but are not limited to, those shown below.

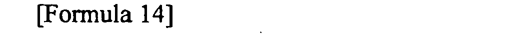

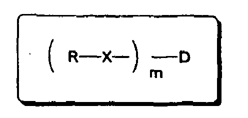

| | D | m | x | R |
|---|---|---|---|---|
| B-1 | 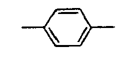 | 2 | -O- | -(CH₂)₁₀CO₂C₈H₁₇ |
| B-2 | 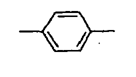 | 2 | 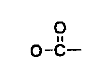 | 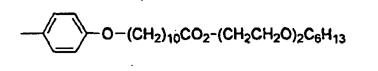 |
| B-3 | 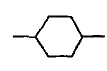 | 2 | 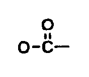 | 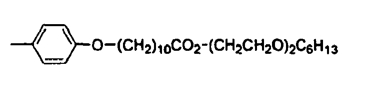 |
| B-4 | 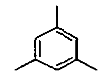 | 3 | -O- | -(CH₂)₇CO₂-(CH₂CH₂O)₂C₆H₁₃ |
| B-5 | 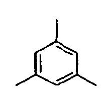 | 3 | -O- | -(CH₂)₁₀CO₂-(CH₂CH₂O)₂C₆H₁₃ |
| B-6 | 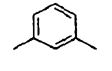 | 3 | 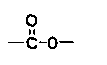 | -(CH₂)₁₀CO₂-(CH₂CH₂O)₃CH₃ |
| B-7 | 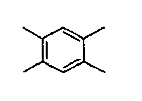 | 4 | -S- | 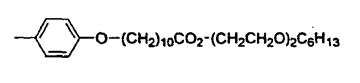 |
| B-8 | 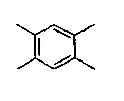 | 4 | -O- | -(CH₂)₁₀CO₂-(CH₂CH₂O)₂C₆H₁₃ |
| B-9 | 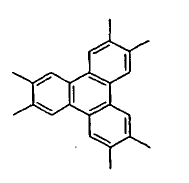 | 6 | -O- | -(CH₂)₁₀CO₂-(CH₂CH₂O)₂C₆H₁₃ |
| B-10 | 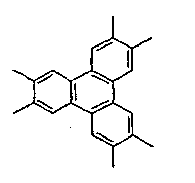 | 6 | 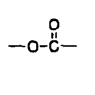 | 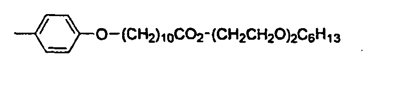 |

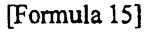

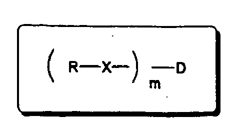

| | D | m | X | R |
|---|---|---|---|---|
| E-1 | 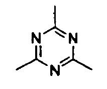 | 3 | 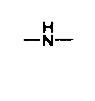 | 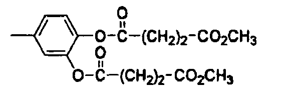 |
| E-2 | 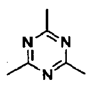 | 3 | 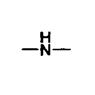 | 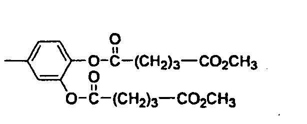 |
| E-3 | 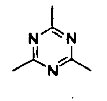 | 3 | 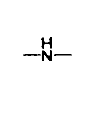 | 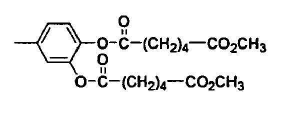 |
| E-4 | 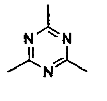 | 3 | 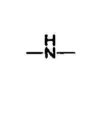 | 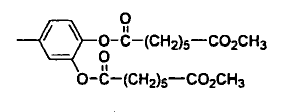 |
| E-5 | 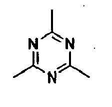 | 3 | 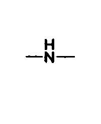 | 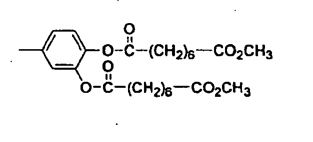 |
| E-6 | 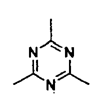 | 3 | 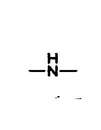 | 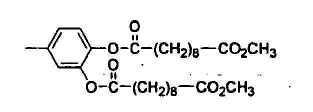 |
| E-7 | 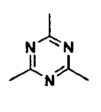 | 3 | 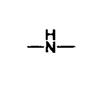 | 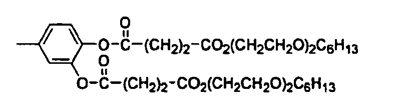 |
| E-8 | 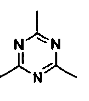 | 3 | 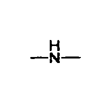 | 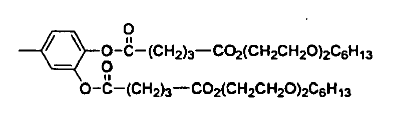 |
| E-9 | 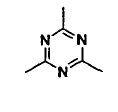 | 3 | 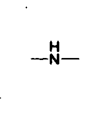 | 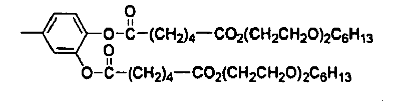 |
| E-10 | 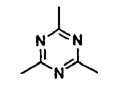 | 3 | 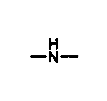 | 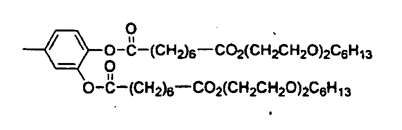 |

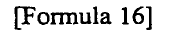

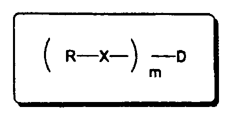

| | D | m | X | R |
|---|---|---|---|---|
| E-11 | 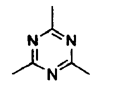 | 3 | 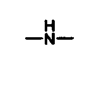 | 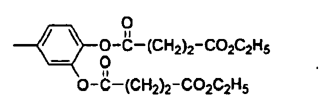 |
| E-12 | 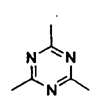 | 3 | 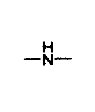 | 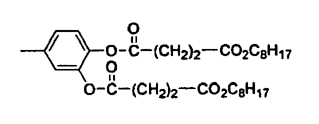 |
| E-13 | 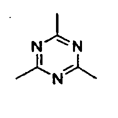 | 3 | 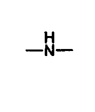 | 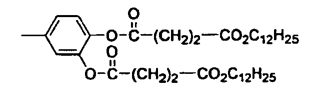 |
| E-14 | 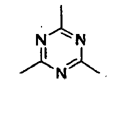 | 3 | 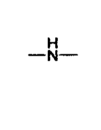 | 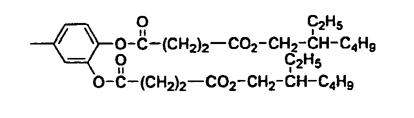 |
| E-15 | 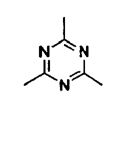 | 3 | 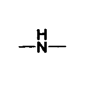 | 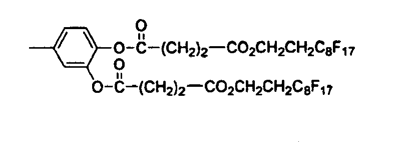 |
| E-16 | 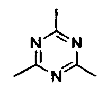 | 3 | 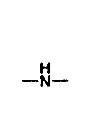 | 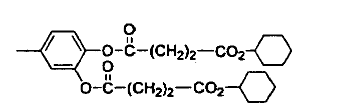 |
| E-17 | 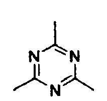 | 3 | 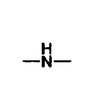 | 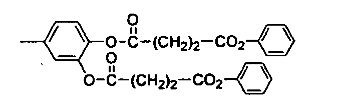 |
| E-18 | 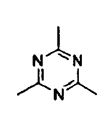 | 3 | 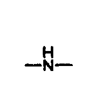 | 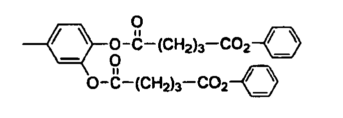 |
| E-19 | 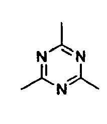 | 3 | 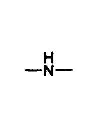 | 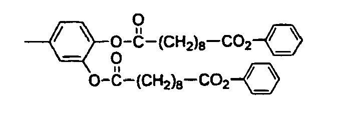 |
| E-20 | 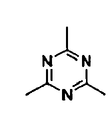 | 3 | 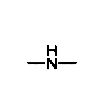 | 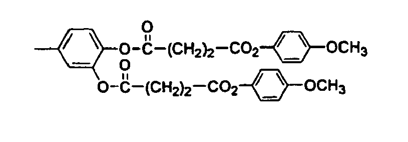 |

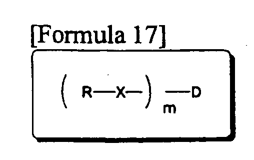

| | D | m | X | R |
|---|---|---|---|---|
| E-21 | 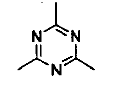 | 3 | 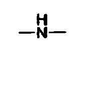 | 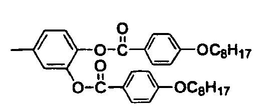 |
| E-22 | 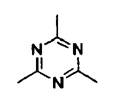 | 3 | 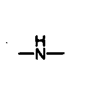 | 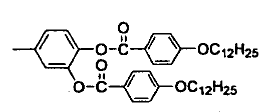 |
| E-23 | 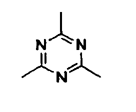 | 3 | 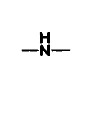 | 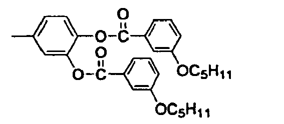 |
| E-24 | 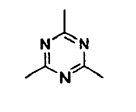 | 3 | 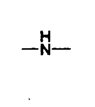 | 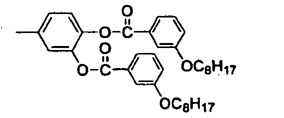 |
| E-25 | 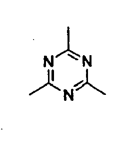 | 3 | 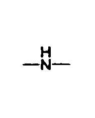 | 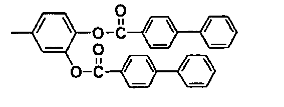 |
| E-26 | 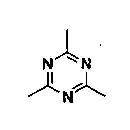 | 3 | 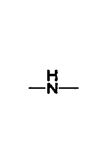 | 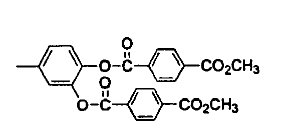 |
| E-27 | 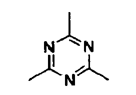 | 3 | 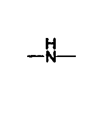 | 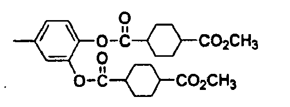 |
| E-28 | 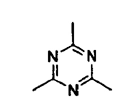 | 3 | 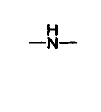 | 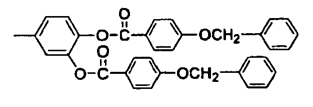 |
| E-29 | 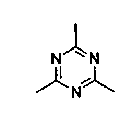 | 3 | 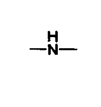 | 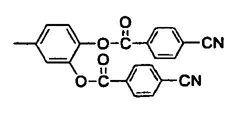 |
| E-30 | 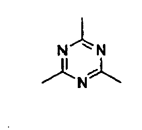 | 3 | 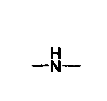 | 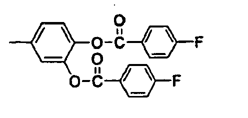 |

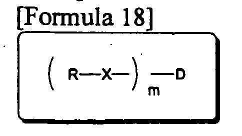

| | D | m | X | R |
|---|---|---|---|---|
| E-31 | 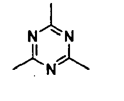 | 3 | 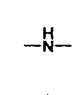 | 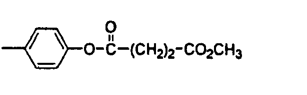 |
| E-32 | 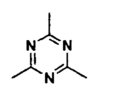 | 3 | 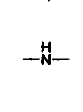 | 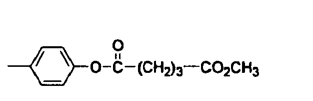 |
| E-33 | 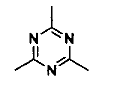 | 3 | 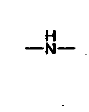 | 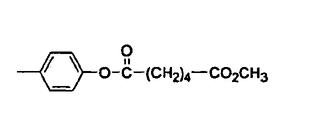 |
| E-34 | 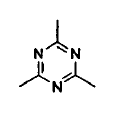 | 3 | 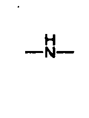 | 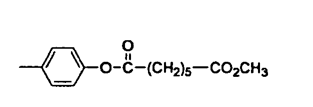 |
| E-35 | 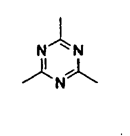 | 3 | 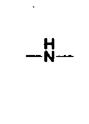 | 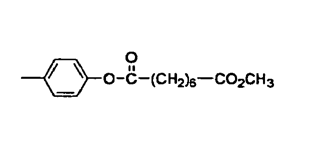 |
| E-36 | 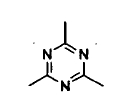 | 3 | 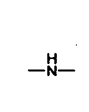 | 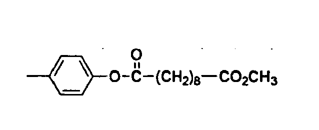 |
| E-37 | 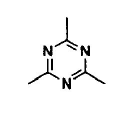 | 3 | 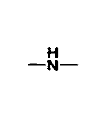 | 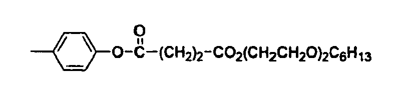 |
| E-38 | 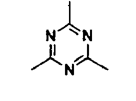 | 3 | 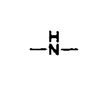 | 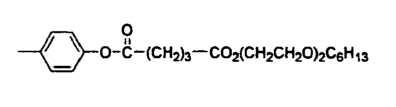 |
| E-39 | 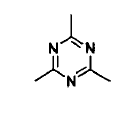 | 3 | 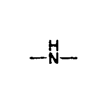 | 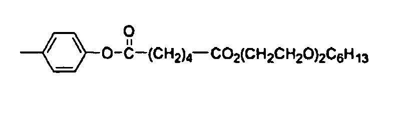 |
| E-40 | 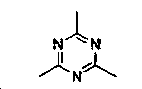 | 3 | 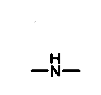 | 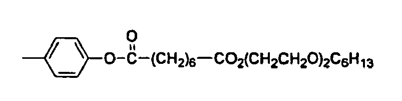 |

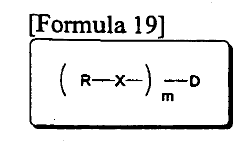

| | D | m | X | R |
|---|---|---|---|---|
| E-41 | 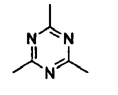 | 3 | 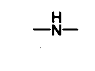 | 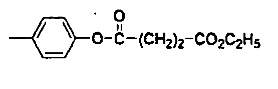 |
| E-42 | 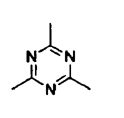 | 3 | 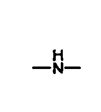 | 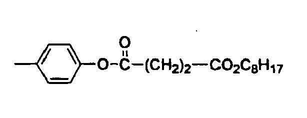 |
| E-43 | 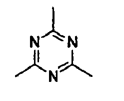 | 3 | 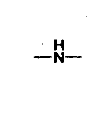 | 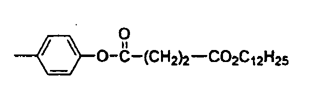 |
| E-44 | 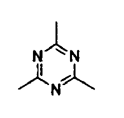 | 3 | 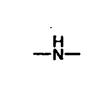 | 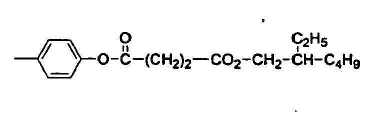 |
| E-45 | 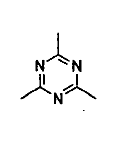 | 3 | 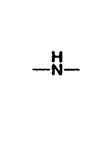 | 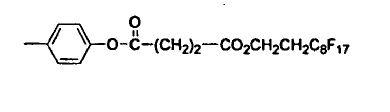 |
| E-46 | 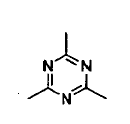 | 3 | 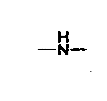 | 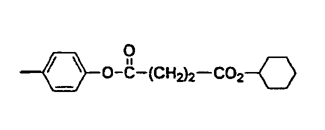 |
| E-47 | 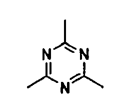 | 3 | 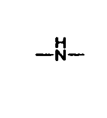 | 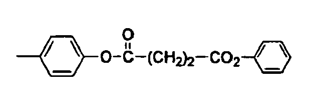 |
| E-48 | 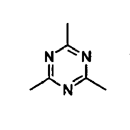 | 3 | 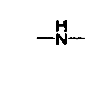 | 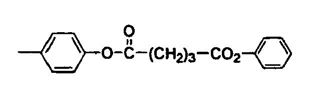 |
| E-49 | 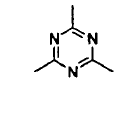 | 3 | 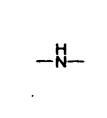 | 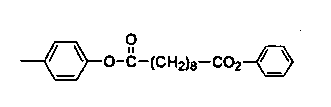 |
| E-50 | 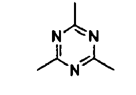 | 3 | 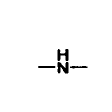 | 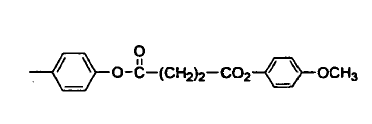 |

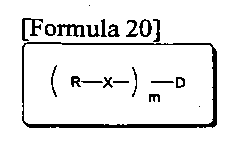

| | D | m | X | R |
|---|---|---|---|---|
| E-51 | 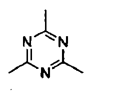 | 3 | 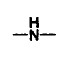 | 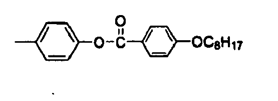 |
| E-52 | 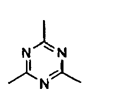 | 3 | 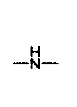 | 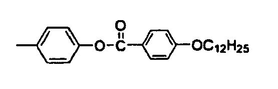 |
| E-53 | 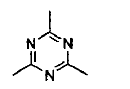 | 3 | 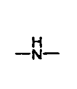 | 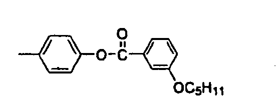 |
| E-54 | 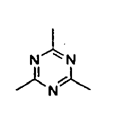 | 3 | 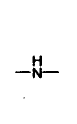 | 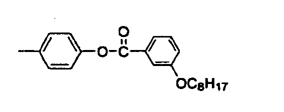 |
| E-55 | 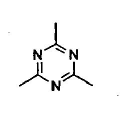 | 3 | 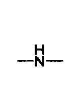 | 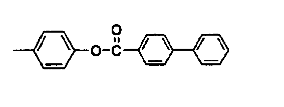 |
| E-56 | 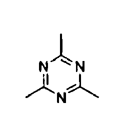 | 3 | 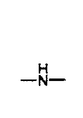 | 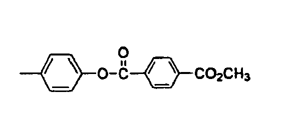 |
| E-57 | 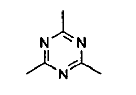 | 3 | 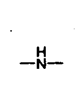 | 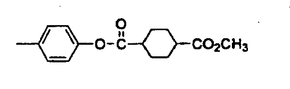 |
| E-58 | 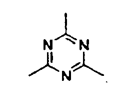 | 3 | 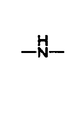 | 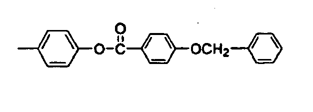 |
| E-59 | 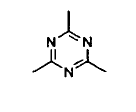 | 3 | 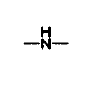 | 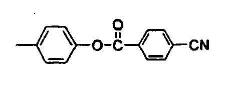 |
| E-60 | 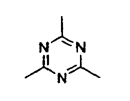 | 3 | 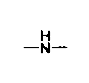 | 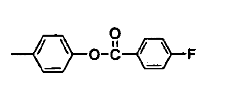 |

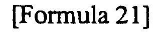

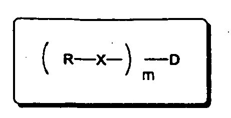

| | D | m | X | R |
|---|---|---|---|---|
| L-1 | 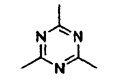 | 3 | 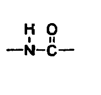 | 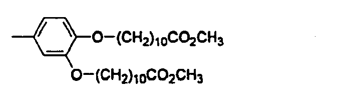 |
| L-2 | 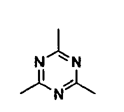 | 3 | 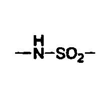 | 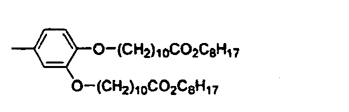 |
| L-3 | 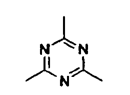 | 3 | 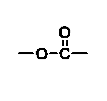 | 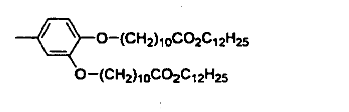 |
| L-4 | 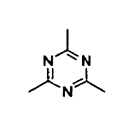 | 3 | 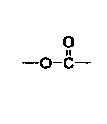 | 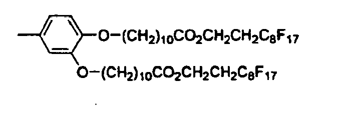 |
| L-5 | 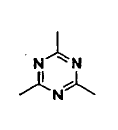 | 3 | 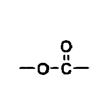 | 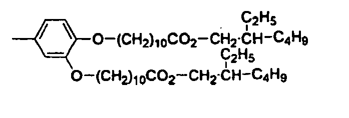 |
| L-6 | 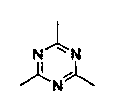 | 3 | -O- | 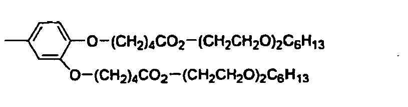 |
| L-7 | 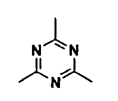 | 3 | -O- | 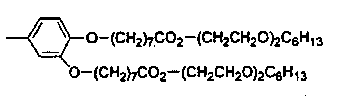 |
| L-8 | 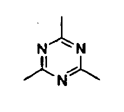 | 3 | -O- | 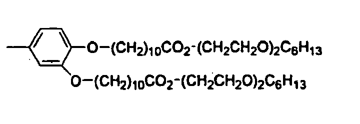 |
| L-9 | 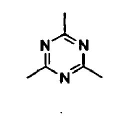 | 3 | -O- | 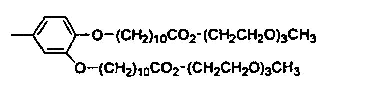 |
| L-10 | 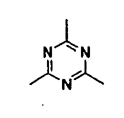 | 3 | -O- | 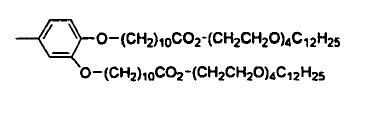 |

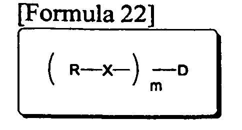

| | D | m | X | R |
|---|---|---|---|---|
| L-11 | 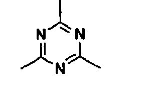 | 3 | 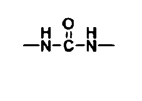 | 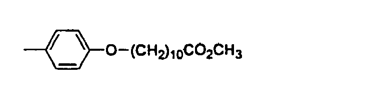 |
| L-12 | 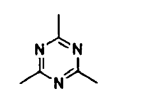 | 3 | 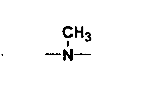 | 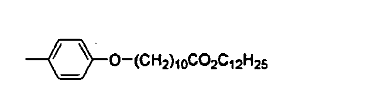 |
| L-13 | 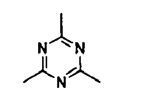 | 3 | 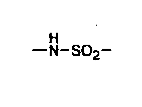 | 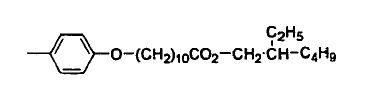 |
| L-14 | 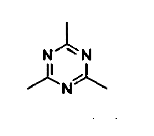 | 3 | -O- | 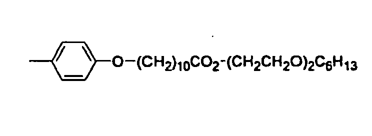 |
| L-15 | 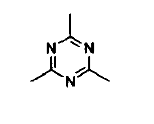 | 3 | -O- | 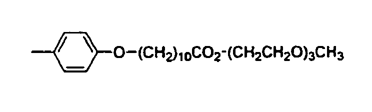 |
| H-1 | 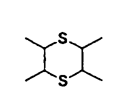 | 4 | -S- | -(CH₂)₁₀CO₂CH₃ |
| H-2 | 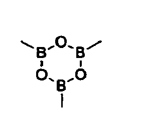 | 3 | - | -(CH₂)₁₀CO₂C₈H₁₇ |
| H-3 | 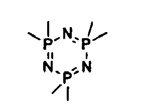 | 6 | -O- | 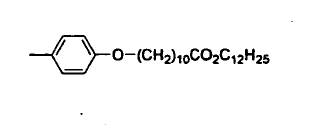 |
| H-4 | 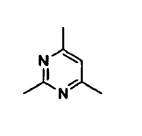 | 3 | 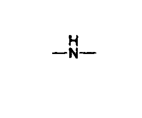 | -(CH₂)₁₀CO₂-(CH₂CH₂O)₂C₆H₁₃ |
| H-5 | 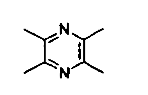 | 4 | 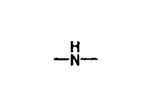 | -(CH₂)₁₀CO₂-(CH₂CH₂O)₂C₆H₁₃ |

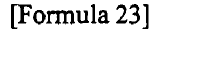

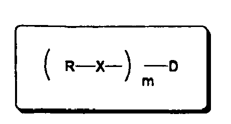

| | D | m | X | R |
|---|---|---|---|---|
| N-1 | 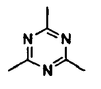 | 3 | 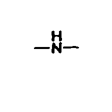 | -(CH₂)₁₀CO₂CH₃ |
| N-2 | 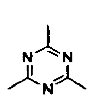 | 3 | 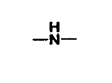 | -(CH₂)₁₀CO₂C₈H₁₇ |
| N-3 | 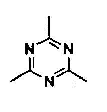 | 3 | 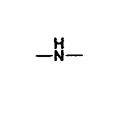 | -(CH₂)₁₀CO₂C₁₂H₂₅ |
| N-4 | 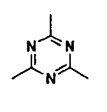 | 3 | 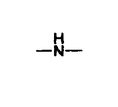 | -(CH₂)₁₀CO₂CH₂CH₂C₈F₁₇ |
| N-5 | 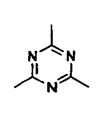 | 3 | 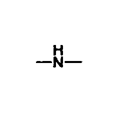 | 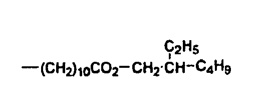 |
| N-6 | 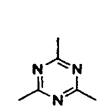 | 3 | 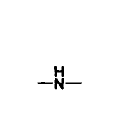 | -(CH₂)₄CO₂-(CH₂CH₂O)₂C₆H₁₃ |
| N-7 | 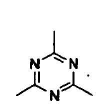 | 3 | 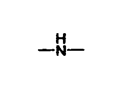 | -(CH₂)₇CO₂-(CH₂CH₂O)₂C₆H₁₃ |
| N-8 | 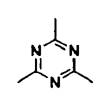 | 3 | 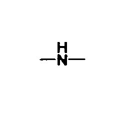 | -(CH₂)₁₀CO₂-(CH₂CH₂O)₂C₆H₁₃ |
| N-9 | 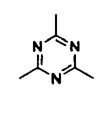 | 3 | 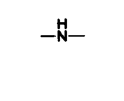 | -(CH₂)₁₀CO₂-(CH₂CH₂O)₃CH₃ |
| N-10 | 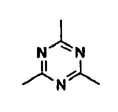 | 3 | 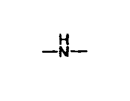 | -(CH₂)₁₀CO₂-(CH₂CH₂O)₄C₁₂H₂₅ |

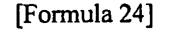

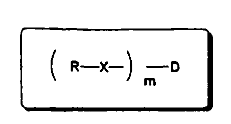

| | D | m | X | R |
|---|---|---|---|---|
| N-21 | 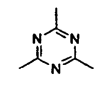 | 3 | 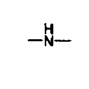 | 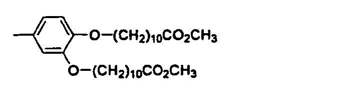 |
| N-22 | 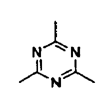 | 3 | 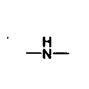 | 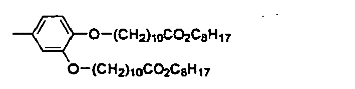 |
| N-23 | 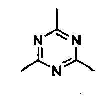 | 3 | 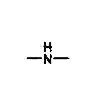 | 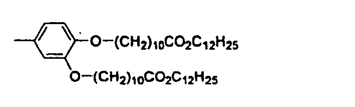 |
| N-24 | 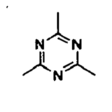 | 3 | 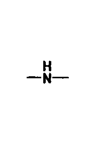 | 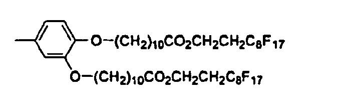 |
| N-25 | 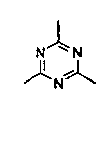 | 3 | 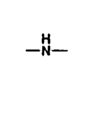 | 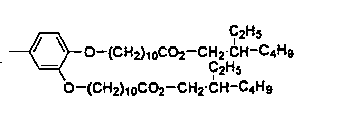 |
| N-26 | 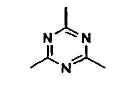 | 3 | 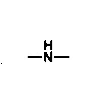 | 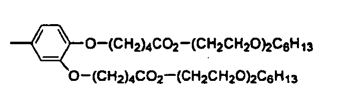 |
| N-27 | 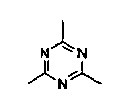 | 3 | 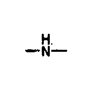 | 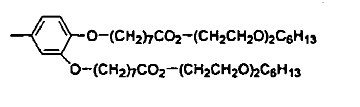 |
| N-28 | 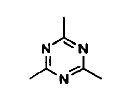 | 3 | 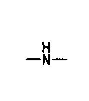 | 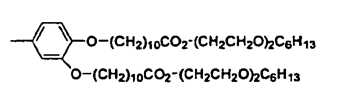 |
| N-29 | 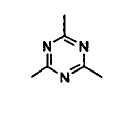 | 3 | 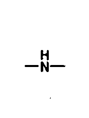 | 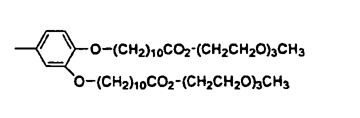 |
| N-30 | 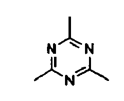 | 3 | 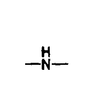 | 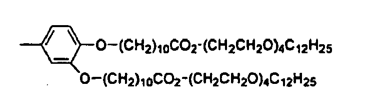 |

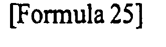

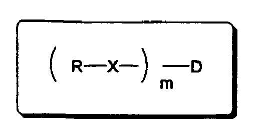

| | D | m | X | R |
|---|---|---|---|---|
| N-31 | 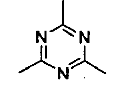 | 3 | 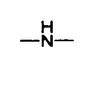 | 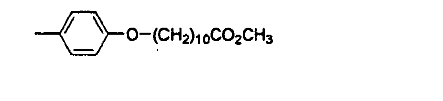 |
| N-32 | 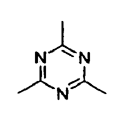 | 3 | 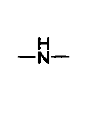 | 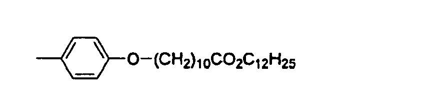 |
| N-33 | 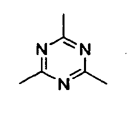 | 3 | 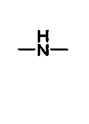 | 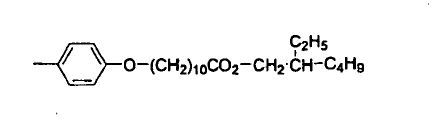 |
| N-34 | 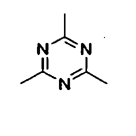 | 3 | 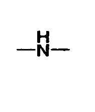 | 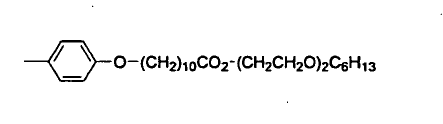 |
| N-35 | 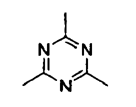 | 3 | 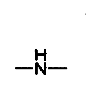 | 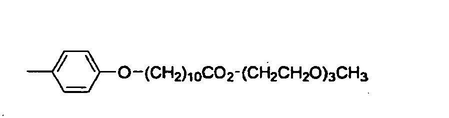 |

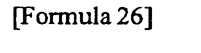

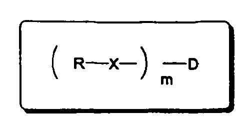

| | D | m | X | R |
|---|---|---|---|---|
| S-1 | 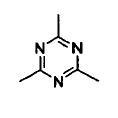 | 3 | -S- | -(CH₂)₁₀CO₂CH₃ |
| S-2 | 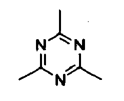 | 3 | -S- | -(CH₂)₁₀CO₂C₈H₁₇ |
| S-3 | 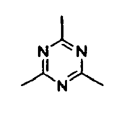 | 3 | -S- | -(CH₂)₁₀CO₂C₁₂H₂₅ |
| S-4 | 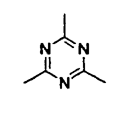 | 3 | -S- | -(CH₂)₁₀CO₂CH₂CH₂C₈F₁₇ |
| S-5 | 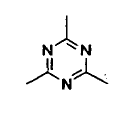 | 3 | -5- | 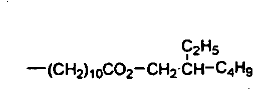 |
| S-6 | 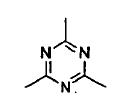 | 3 | -S- | -(CH₂)₄CO₂-(CH₂CH₂O)₂C₆H₁₃ |
| S-7 | 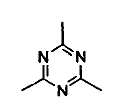 | 3 | -S- | -(CH₂)₇CO₂-(CH₂CH₂O)₂C₆H₁₃ |
| S-8 | 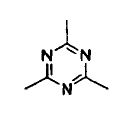 | 3 | -S- | -(CH₂)₁₀CO₂-(CH₂CH₂O)₂C₆H₁₃ |
| S-9 | 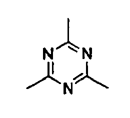 | 3 | -S- | -(CH₂)₁₀CO₂-(CH₂CH₂O)₃CH₃ |
| S-10 | 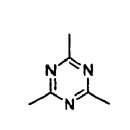 | 3 | -S- | -(CH₂)₁₀CO₂-(CH₂CH₂O)₄C₁₂H₂₅ |

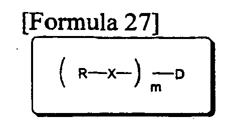

| | D | m | X | R |
|---|---|---|---|---|
| S-21 | 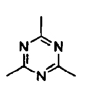 | 3 | -S- | 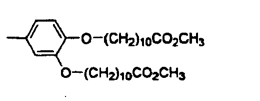 |
| S-22 | 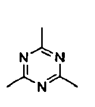 | 3 | -S- | 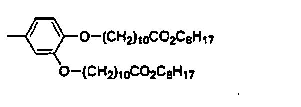 |
| S-23 | 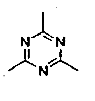 | 3 | -S- | 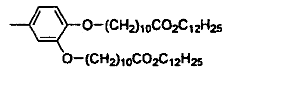 |
| S-24 | 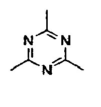 | 3 | -S- | 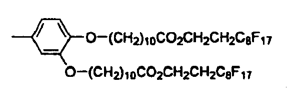 |
| S-25 | 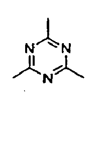 | 3 | -S- | 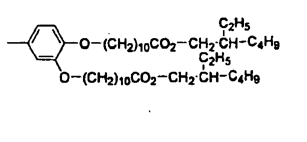 |
| S-26 | 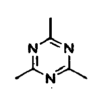 | 3 | -S- | 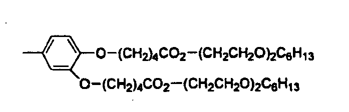 |
| S-27 | 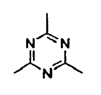 | 3 | -S- | 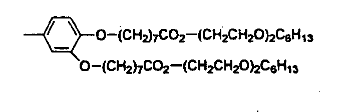 |
| S-28 | 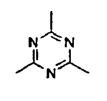 | 3 | -S- | 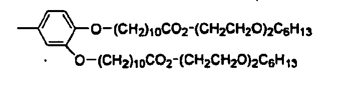 |
| S-29 | 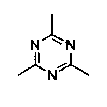 | 3 | -S- | 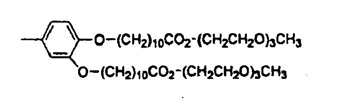 |
| S-30 | 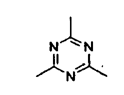 | 3 | -S- | 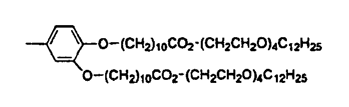 |

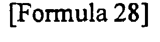

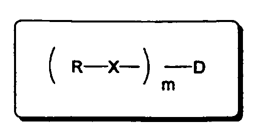

| | D | m | X | R |
|---|---|---|---|---|
| S-31 | 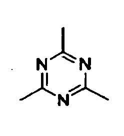 | 3 | -S- | 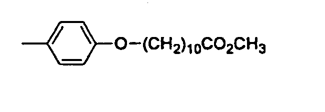 |
| S-32 | 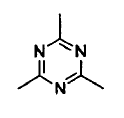 | 3 | -S- | 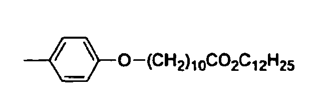 |
| S-33 | 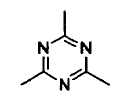 | 3 | -S- | 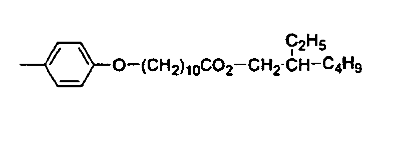 |
| S-34 | 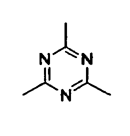 | 3 | -S- | 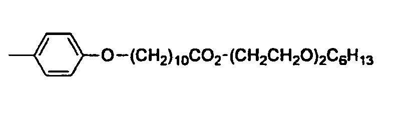 |
| S-35 | 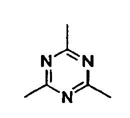 | 3 | -S- | 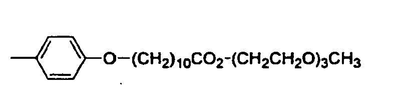 |

The discotic compounds represented by the formula (1) may be prepared by various processes. For example, the compounds may be prepared through reactions of discotic compounds, which can be a mother core, with regents capable of introducing side chains containing an ester bond into the discotic cores, such as nucleophilic substitution reactions of cyanuric chloride, alkylations of thiocyanuric acid, coupling reactions of benzene derivatives or alkylations, etherifications or amide-formation reactions of hydroxide benzene derivatives. The compounds may also be prepared by creating cyclic compounds using compounds having ester groups in side chains to form discotic compounds. Among these processes, the processes comprising reactions of cyclic compounds having chlorine such as cyanuric chloride or pyrimidine chloride with compounds having active hydrogen such as amine, alcohol, phenol, thioalcohol or thiophenol, are preferred; and the processes comprising reactions of cyanuric chloride are more preferred.

Examples of the organic solvent, which may be used for the reactions, include halogenated hydrocarbon base organic solvents such as dichloromethane, ester base organic solvents such as methyl acetate or ethyl acetate, ketone base organic solvents such as acetone or methylethylketone, ether base organic solvents such as tetrahydrofuran or dioxane, nitrile base organic solvents such as acetonitrile or propionitrile, amide base organic solvents such as N,N-dimethyl formamide, N,N-dimethylacetamide, 1,3-dimethyl-2-imidazolidone, 1,3-dimethyl-3,4,5,6,-tetrahydro-2(1H)-pyrimidinone(DMPU) or triamide hexamethylphosphate, and sulfoxide base organic solvents such as dimethylsulfoxide. Catalysts or bases may be used if needed. As described in the description of Japanese Patent application No. 2004-080527, it is possible to synthesize tris(hydroxyphenylamino)-13,5-triadines with a high yield by carrying out a reaction of cyanuric chloride and aminophenol derivative in a mixed solvent of water and an organic solvent(s) in the presence of base, and such the synthetic method is also preferred.

The composition to be employed in the surface treatment method may comprise other additive(s) besides at least one discotic compound. The composition may comprise mineral or synthetic oil which is generally used as a base oil in lubricants. The mineral or synthetic oil is not specifically be limited, and any of those generally used as a lubricant base oil will be available. Any mineral oils, synthetic oils and mixed oils thereof may be used. Examples of the mineral oil include solvent-refined raffinate obtained by extracting a source oil, which is derived from a paraffin-base, intermediate-base or naphthene-base crude oil by distillation under atmospheric or reduced pressure, using an aromatic solvent such as phenol, furfural or N-methylpyrrolidone; hydrogenated oil obtained by treating the source oil with hydrogen under hydrogenation conditions in the presence of hydrogenation catalyst such as cobalt or molybdenum immobilized on silica-alumina support; hydrogenated cracked petroleum obtained by treating the source oil with hydrogen under severe decomposition reaction conditions in the presence of hydrogenation decomposition catalyst; isomerized oil obtained by treating wax with hydrogen under isomerization conditions in the presence of isomerization catalyst; and fraction of lubricating oil obtained by a combined process of solvent refining and hydrogenation of the source oil, or by a combined process of hydrogenation and isomerization or the like. In particular, those obtained by a combined process of hydrogenation and isomerization or the like, having high viscosity index, are preferable. Any of such manufacturing methods can arbitrarily be added with the individual processes for dewaxing, hydrogenation finishing and clay treatment. Examples of the synthetic oil include poly(α-olefin), α-olefin oligomer, polybutene, alkylbenzene, polyol ester, dibasic acid ester, polyoxyalkylene glycol, polyoxyalkylene glycol ether and silicone oil. These base oils may be used independently or in any combinations of two or more thereof. It is also possible to use mineral oil and synthetic oil in combination. Such lubricant base oil, which can be used in the invention, generally has a kinematic viscosity of 2 to 20 mm²/s, and preferably 3 to 15 mm²/s, at 100 degrees Celsius.

For the embodiments of the lubricant composition comprising the discotic compound and the base oil, preferable amount of the discotic compound is 0.1 to 20 mass % and preferable amount of the base oil is 80 to 99.9 mass % with respect to the total mass of the lubricant base oil. The amount of the discotic compound is more preferably 0.1 to 10 mass %, and most preferably 0.1 to 5 mass %. However, as described above, it is possible to employ the discotic compound alone in the surface treatment method of the invention. Using the discotic compound alone for a lubricant basic oil, it is often possible to obtain more excellent advantage, for example it is possible to obtain low friction coefficient over a wider temperature range in a long term even under severe lubricant condition after being subjected to the surface treatment and as well as more excellent wear resistance, compared with using the compound in combination with base oil.

The composition to be used in the surface treatment method of the invention preferably comprises the discotic compound as a main ingredient. The composition may comprise, as occasion demands, any known additives having been used for conventional lubricant such as bearing oil, gear oil and power transmission oil, in order to attain practical performances adopted for the individual applications within a range not adversely affecting the effects of the present invention, where such additives include wear preventive agent, extreme pressure agent, antioxidant, viscosity index raising agent, clean dispersion aid, metal passivation agent, corrosion preventive agent, rust preventive agent, and defoaming agent.

The condition of the composition is not to be limited, and it may be a fluid or solid condition. The composition may be used for articles as lubricant or mold-releasing agent.

### [Surface treatment method]

The surface treatment method of the invention is a method comprising coating at least a part of a surface of an object with a composition comprising at least one type of discotic compound, and applying a temperature variation to the composition. According to one embodiment of the invention, a surface of an object is coated with a composition comprising at least one type of discotic compound under an atmosphere at T₁ degrees Celsius, and, then, heated up by T₁ degrees Celsius ( provided that T₁<T₂) thereby applying a temperature variation. The difference between T₂ and T₁ is preferably from 10 to 250 degrees Celsius and more preferably from 50 to 200 degrees Celsius. The temperature is raised stepwise.
The rate of temperature increase is preferably from 0.1 to 50 degrees Celsius/min, and more preferably from 5 to 30degrees Celsius/min.

It is preferable that a shearing force is applied to the composition simultaneously, before or after a temperature variation is applied to the composition, and more preferable that a shearing force is applied to the composition simultaneously a temperature variation is applied to the composition. According to one preferred embodiment of the surface treatment method, a sliding surface(s) of an object is coated with the composition, and, then, a temperature variation is applied to the composition while the object is being slid, and more preferably while the object is being slid under load.

The surface treatment method of the invention is especially effective for sliding surfaces of sliding members since the surface treatment can achieve reduced friction coefficient(s) of the surface(s) and long-lasting low friction property. The material of the object to be subjected to the surface treatment of the invention is not to be limited; and the surface treatment of the invention may be applied to articles made of any materials such as metals, glasses, lumbers, pulps, stones, fibers, ceramics, and cements. The surface treatment of the invention may also be applied to articles having any shapes. More specifically, the surface treatment of the invention is effective for any moving parts of a mechanical element comprising two members contacting each other such as sliding gears, bearings, cams, shims, cylinders, pistons, cranks, pivots and bearings (jiku uke).

One embodiment of the surface treatment method of the invention is a surface treatment method comprising coating at least a part of a surface of an object made of a polymer material with a composition comprising at least one type of discotic compound, and applying a temperature variation to the composition. In this embodiment, the surface, to be applied with the composition, of an object is made of a polymer material, and other parts of the object, such as any parts other than the surface or the parts of the surface other than the target part of the surface, may be made of any materials such as metals or ceramics, which are other than polymer materials. The shape of the object is not to be limited. Examples of the polymer material include polyethylenes such as low-density polyethylene, high-density polyethylene and ultra high molecular weight polyethylene; modified polyethylenes, water bridged polyolefin resins, polyamide, aromatic polyamide, polystyrenes, polypropylenes, silicone resins, urethane resins, polytetrafluoroethylenes, chlorotrifluoroethylene resins, tetrafluoroethylene · hexafluoropropylene copolymers, tetrafluoroethylene perfluoro alkyl vinyl ether copolymers, polyvinylidene fluorides, ethylene · tetrafluoroethylene copolymers, polyacetal resins, polyethylene terephthalate resins, polybutylene terephthalate resins, polyphenylene ether resins, polycarbonates, aliphatic polyketones, polyvinylpyrrolidones, polyoxazolines, polyphenylene sulfide resins, polyether sulfone resins, polyether imide resins, polyamide imide resins, polyether ether ketone resins, thermoplastic polyimide resins, thermosetting polyimide resins, epoxy resins, phenol resins, unsaturated polyesters, and vinyl ester resins. Any mixture of two or more materials selected from the above mentioned polymer materials, namely polymer alloys can be employed. This embodiment of the surface treatment method is effective for any moving parts of a mechanical element comprising two members contacting each other such as sliding gears, bearings, cams, shims, cylinders, pistons, cranks, pivots and bearings (jiku uke) of which surfaces are made of the above mentioned material.

### EXAMPLES

The present invention will further specifically be explained referring to Examples. Any materials, reagents, amounts and ratios of substances, operations and so forth may appropriately be modified without departing from the spirit of the present invention. It is therefore to be understood that the present invention is by no means limited to the specific examples below.

### [Example Nos. 1-1 to 1-9 and Comparative Example Nos. 1-1 to 1-7]

Surface treatments were carried out under conditions shown below employing Compound Nos. N-28, N-34, E-36, E-37, E-51, S-28 and S-31 above exemplified as a discotic compound and some lubricant base oils as a comparative example. The employed compounds were prepared with reference to the synthetic methods described on "Examples Section" in the descriptions of Japanese patent application Nos. 2003-109037, 2004-080304, and 2004-080527. After that, friction tests were carried out, and, then, the coefficients of friction were measured. Each coefficient of friction was measured by using a reciprocating type friction test machine (SRV friction wear test machine) while the friction test was being carried out under the following conditions.

### (Surface Treatment A)

Each of Compound Nos. 1-1 to 1-9, which are examples of the invention, and lubricant compositions 1-1 to 1-7, which are comparative examples, shown in Table 1 were applied to a sliding surface of a specimen. Then, the heating treatment was carried out for each sample by heating from 40degrees Celsius to 200degrees Celsius at a rate of temperature increase of 20degrees Celsius/min stepwise in a manner that kept for 5 minutes per each temperature.

### (Surface Treatment B)

The heating treatment was carried out for each sample in the same manner as Surface Treatment A while the sliding surface of the specimen was being slid by using a cylinder under the conditions that the measuring load was 400N, the amplitude was 1.5mm and the frequency was 50Hz.

### (Test Conditions)

Tests were carried out under the conditions of Cylinder on Plate Test.

| | |
|---|---|
| Specimen (friction material | ): SUJ-2 |
| Plate | : ϕ 24 mm × 6.9 mm |
| Cylinder | : ϕ 15 mm × 22 mm |
| Temperature | : 200degrees Celsius |
| Load | : 400N |
| Amplitude | : 1.5 mm |
| Frequency | : 50 Hz |
| Testing period : | each friction coefficient was measured 30 minutes after the start of testing |

The results were shown in Table 1.

**[Table 1]**

| | Compound No. | Surface Treatment | Coefficient of friction |
|---|---|---|---|
| Example 1-1 | N-28 | A | 0.015 |
| Example 1-2 | N-34 | A | 0.016 |
| Example 1-3 | E-36 | A | 0.025 |
| Example 1-4 | E-37 | A | 0.020 |
| Example 1-5 | E-51 | A | 0.017 |
| Example 1-6 | S-28 | A | 0.020 |
| Example 1-7 | S-31 | A | 0.020 |
| Example 1-8 | N-28 | B | 0.013 |
| Example 1-9 | N-34 | B | 0.014 |
| Comparative Example 1-1 | pentaerythritol ester | A | 0.190 |
| Comparative Example 1-2 | pentaerythritol ester | B | 0.190 |
| Comparative Example 1-3 | alkyl benzene | A | 0.200 |
| Comparative Example 1-4 | naphthenic mineral oil | A | 0.200 |
| Comparative Example 1-5 | paraffin base mineral oil | A | 0.200 |
| Comparative Example 1-6 | N-28 | None | 0.030 |
| Comparative Example 1-7 | N-34 | None | 0.035 |

From the data shown in Table 1, it is understandable that all of the objects, which were subjected to the surface treatment of the invention respectively, exhibited low friction properties in the friction test.

### [Example Nos. 2-1 to 2-11 and Comparative Example Nos. 2-1 to 2-7]

Surface treatments were carried out under conditions shown below employing Compound Nos. N-28, N-34, E-36, E-37, E-51, S-28 and S-31 above exemplified as a discotic compound and some lubricant base oils as a comparative example. The employed compounds were prepared with reference to the synthetic methods described on "Examples Section" in the descriptions of Japanese patent application Nos. 2003-109037, 2004-080304, and 2004-080527. After that, friction tests were carried out, and, then, the coefficients of friction were measured. Each coefficient of friction was measured by using a reciprocating type friction test machine (SRV friction wear test machine) while the friction test was being carried out under the following conditions.

### (Surface Treatment A)

Each of compounds shown in Table 2 as Example Nos. 2-1 to 2-11 Nos. 1-1 and lubricant compositions shown in Table 2 as Comparative Example Nos. 2-1 to 2-7 were applied to a sliding surface of a specimen. Then, the heating treatment was carried out for each sample by heating at a rate of temperature increase of 10degrees Celsius/min stepwise in a manner that kept for 5 minutes per each temperature.

### (Surface Treatment B)

The heating treatment was carried out for each sample in the same manner as Surface Treatment A while the sliding surface of the specimen was being slid by using a cylinder under the conditions that the measuring load was 50N, the amplitude was 1.0mm and the frequency was 50Hz.

### (Test Conditions)

Tests were carried out under the conditions of Cylinder on Plate Test.

| | |
|---|---|
| Specimen (friction material) | |
| Plate ϕ24 × 6.9 mm | : polymer materials (PEEK(polyetheretherketone) and POM (polyacetal)) |
| Ball ϕ 10mm | : SUJ-2 |
| Temperature | : 60degrees Celsius/100degrees Celsius |
| Load | : 200N |
| Amplitude | : 1.0 mm |
| Frequency | : 50 Hz |
| Testing period : | each friction coefficient was measured 10 minutes after the start of testing |

The results were shown in Table 2.

**[Table 2]**

| | Plate material | Compound No. | Surface Treatment | | Test temperature (C degrees) | Coefficient of friction of friction |
|---|---|---|---|---|---|---|
| | | | Method | Treatment temperature (C degrees) | | |
| Example 2-1 | PEEK | N-28 | A | 20-100 | 100 | 0.050 |
| Example 2-2 | PEEK | N-34 | A | 20-100 | 100 | 0.050 |
| Example 2-3 | PEEK | E-36 | A | 20-100 | 100 | 0.055 |
| Example 2-4 | PEEK | E-37 | A | 20-100 | 100 | 0.054 |
| Example 2-5 | PEEK | E-51 | A | 20-100 | 100 | 0.055 |
| Example 2-6 | PEEK | S-28 | A | 20-100 | 100 | 0.056 |
| Example 2-7 | PEEK | S-31 | A | 20-100 | 100 | 0.050 |
| Example 2-8 | PEEK | N-28 | B | 20-100 | 100 | 0.040 |
| Example 2-9 | PEEK | N-34 | B | 20-100 | 100 | 0.040 |
| Example 2-10 | POM | N-28 | A | 20-60 | 60 | 0.051 |
| Example 2-11 | POM | N-28 | B | 20-60 | 60 | 0.040 |
| Comparative Example 2-1 | PEEK | alkyl benzene | A | 20-100 | 100 | 0.090 |
| Comparative Example 2-2 | PEEK | naphthenic mineral oil | A | 20-100 | 100 | 0.090 |
| Comparative Example 2-3 | PEEK | paraffin base | A | 20-100 | 100 | 0.090 |
| Comparative Example 2-4 | POM | paraffin mineral oil base | A | 20-60 | 60 | 0.088 |
| Comparative Example 2-5 | PEEK | N-28 | None | - | 100 | 0.070 |
| Comparative Example 2-6 | POM | N-28 | None | - | 60 | 0.071 |
| Comparative Example 2-7 | PEEK | N-34 | None | - | 100 | 0.070 |

From the data shown in Table 2, it is understandable that all of the objects made of the polymer material, which were subjected to the surface treatment of the invention respectively, exhibited low friction properties in the friction test.

### INDUSTRIAL APPLICABILITY

The surface treatment method and the surface treatment composition are usable as a novel surface treatment and surface treatment composition which are capable of providing a sliding ability, wear-resistance, lubricating ability, water-repellent property releasing ability and so forth to articles.

## Claims

1. A surface treatment method comprising
coating at least a part of a surface of an object with a composition comprising at least one type of discotic compound, and
applying a temperature variation to the surface which has been coated by the composition,
wherein the temperature is raised stepwise thereby applying a temperature variation to the composition.

2. The method of claim 1, wherein the surface coated with the composition is made of a polymer material.

3. The method of claim 1 or 2, wherein, a shearing force is applied to the composition simultaneously, before or after a temperature variation is applied to the composition.

4. The method of any one of claims 1 to 3, wherein the at least one type of discotic compound is a compound represented by a formula (1). 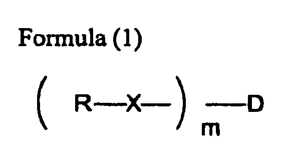 In the formula (1), D represents a cyclic group capable of bonding to "m" of side chains; X respectively represents a single bond or a bivalent linking group selected from the group consisting of NR¹ where R¹ is a hydrogen atom or a C₁₋₃₀ alkyl group, oxygen, sulfur, carbonyl,
sulfonyl and any combinations thereof; R respectively represents a substituted or non-substituted, alkyl group, alkenyl group, alkynyl group, aryl group or heterocyclic group, or a halogen atom, hydroxyl, amino, mercapto, cyano, sulfide, carboxy or a salt thereof,
sulfo or a salt thereof, hydroxyl amino, ureido or urethane; and m is an integer from 2 to 11.

5. The method of claim 4, where D is a heterocyclic residue having a 5 to 7 membered ring structure.

6. The method of claim 4 or 5, wherein the formula (1) is represented by a formula (2). 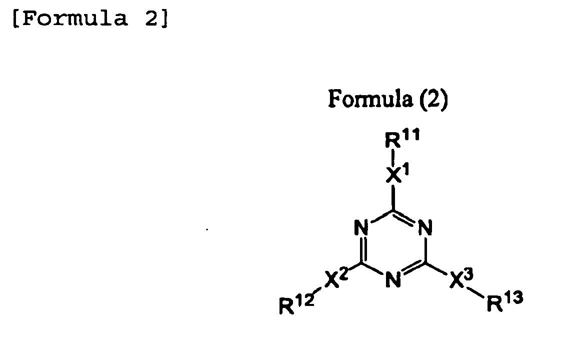 In the formula (2), X¹, X² and X³ respectively represent a single bond or a bivalent linking group selected from the group consisting of NR¹ where R¹ is a hydrogen atom or a C₁₋₃₀ alkyl group, oxygen, sulfur, carbonyl,
sulfonyl and any combinations thereof; and R¹¹, R¹² and R¹³ respectively represent a substituted or non-substituted, alkyl group, alkenyl group, alkynyl group, aryl group or heterocyclic group, or a halogen atom, hydroxyl, amino, mercapto, cyano, sulfide, carboxy or a salt thereof, sulfo or a salt thereof, hydroxyl amino, ureido or urethane.

7. The method of any one of claims 4 to 6, wherein the formula (1) is represented by a formula (3). 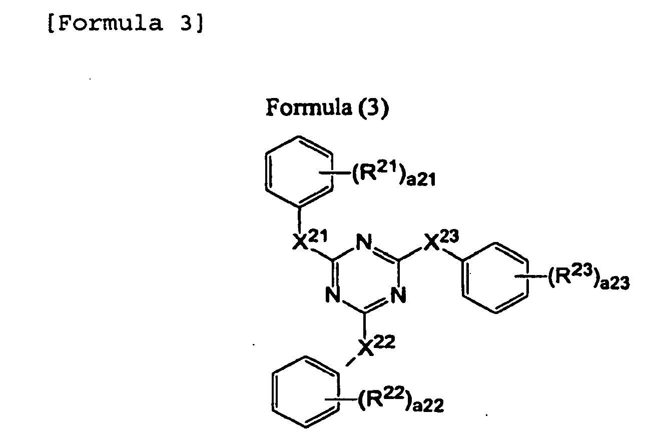 In the formula (3) X²¹, X²² and X²³ respectively represent a single bond or a bivalent linking group selected from the group consisting of NR¹ where R¹ is a hydrogen atom or a C₁₋₃₀ alkyl group, oxygen, sulfur, carbonyl,
sulfonyl and any combinations thereof; R²¹, R²² and R²³ respectively represent a substituent; and a21, a22 and a23 respectively represent an integer from 1 to 5.

8. The method of any one of claims 1 to 7, for reducing at least a coefficient of friction of a surface of an object.

9. A surface-treated article produced according to a method as set forth in any one of claims 1 to 8.

## Patentansprüche

1. Oberflächenbehandlungsverfahren, umfassend Beschichten von zumindest einem Teil einer Oberfläche eines Objektes mit einer Zusammensetzung, umfassend zumindest eine Art einer diskotischen Verbindung und Auferlegung einer Temperaturvariation auf die Oberfläche, die durch Zusammensetzung beschichtet ist; worin die Temperatur schrittweise erhöht wird, wodurch eine Temperaturvariation auf die Zusammensetzung auferlegt wird.

2. Verfahren nach Anspruch 1, worin die mit der Zusammensetzung beschichtete Oberfläche aus einem Polymermaterial erzeugt ist.

3. Verfahren nach Anspruch 1 oder 2, worin eine Scherkraft auf die Zusammensetzung gleichzeitig, vor oder nach der Auferlegung einer Temperaturvariation auf die Zusammensetzung auferlegt wird.

4. Verfahren nach einem der Ansprüche 1 bis 3, worin die zumindest eine Art einer diskotischen Verbindung eine Verbindung mit der Formel (1) ist: 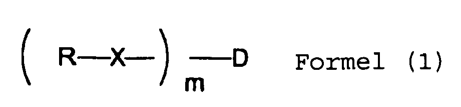 worin in der Formel (1) D eine zyklische Gruppe bedeutet, die in der Lage ist, an "m" Seitenketten zu binden; X jeweils eine Einfachbindung oder eine bivalente Bindegruppe darstellt, ausgewählt aus der Gruppe bestehend aus NR¹, worin R¹ ein Wasserstoffatom oder eine C₁₋₃₀-Alkylgruppe ist, Sauerstoff, Schwefel, Carbonyl, Sulfonyl und irgendwelchen Kombinationen davon; R eine substituierte oder nicht-substituierte Alkylgruppe, Alkenylgruppe, Alkinylgruppe, Arylgruppe oder heterozyklische Gruppe ist oder ein Halogenatom, Hydroxyl, Amino, Mercapto, Cyano, Sulfid, Carboxy oder ein Salz davon, Sulfo oder ein Salz davon, Hydroxylamino, Ureido oder Urethan ist; und m eine ganze Zahl von 2 bis 11 ist.

5. Verfahren nach Anspruch 4, worin D ein heterozyklischer Rest mit einer 5- bis 7-gliedrigen Ringstruktur ist.

6. Verfahren nach Anspruch 4 oder 5, worin die Formel (1) durch die Formel (2) dargestellt ist: 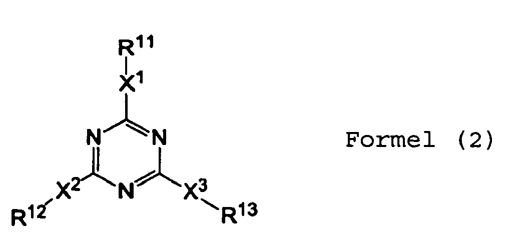 worin in der Formel (2) X¹, X² und X³ jeweils eine Einfachbindung oder eine bivalente Bindegruppe sind, ausgewählt aus der Gruppe bestehend aus NR¹, worin R¹ ein Wasserstoffatom oder eine C₁₋₃₀-Alkylgruppe ist, Sauerstoff, Schwefel, Carbonyl, Sulfonyl und irgendwelchen Kombinationen davon; und R¹¹, R¹² und R¹³ jeweils eine substituierte oder nicht-substituierte Alkylgruppe, Alkenylgruppe, Alkinylgruppe, Arylgruppe oder heterozyklische Gruppe sind oder ein Halogenatom, Hydroxyl, Amino, Mercapto, Cyano, Sulfid, Carboxy oder ein Salz davon, Sulfo oder ein Salz davon, Hydroxylamino, Ureido oder Urethan sind.

7. Verfahren nach einem der Ansprüche 4 bis 6, worin die Formel (1) dargestellt ist durch die Formel (3) 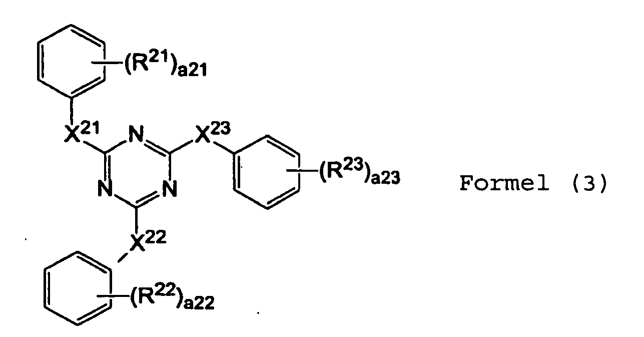 worin in der Formel (3) X²¹, X²² und X²³ jeweils eine Einfachbindung oder eine bivalente Bindegruppe sind, ausgewählt aus der Gruppe bestehend aus NR¹, worin R¹ ein Wasserstoffatom oder eine C₁₋₃₀-Alkylgruppe ist, Sauerstoff, Schwefel, Carbonyl, Sulfonyl und irgendwelchen Kombinationen davon; R²¹, R²² und R²³ jeweils ein Substituent sind und a21, a22 und a23 jeweils eine ganze Zahl von 1 bis 5 sind.

8. Verfahren nach einem der Ansprüche 1 bis 7 zur Reduzierung von zumindest einem Friktionskoeffizienten einer Oberfläche eines Objektes.

9. Oberflächenbehandelter Gegenstand, erzeugt gemäß einem Verfahren nach einem der Ansprüche 1 bis 8.

## Revendications

1. Procédé de traitement de surface comprenant
le revêtement d'au moins une partie d'une surface d'un objet avec une composition comprenant au moins un type de composé discotique, et
l'application d'une variation de température à la surface qui a été revêtue par la composition,
dans lequel la température est augmentée par pas, appliquant ainsi une variation de température à la composition.

2. Procédé selon la revendication 1, dans lequel la surface revêtue avec la composition est constituée d'un matériau polymère.

3. Procédé selon la revendication 1 ou 2, dans lequel une force de cisaillement est appliquée à la composition simultanément à, avant ou après l'application d'une variation de température à la composition.

4. Procédé selon l'une quelconque des revendications 1 à 3, dans lequel l'au moins un type de composé discotique est un composé représenté par une formule (1) 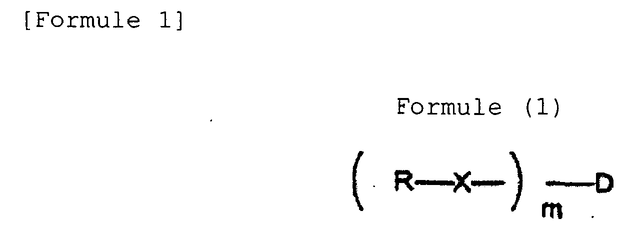 dans la formule (1), D représente un groupe cyclique apte à se lier à « m » de chaînes latérales ; X représente respectivement une liaison simple ou un groupe de liaison bivalent choisi parmi le groupe consistant en NR¹ où R¹ est un atome d'hydrogène ou un groupe alkyle en C₁-C₃₀, un oxygène, un soufre, un carbonyle, un sulfonyle et toutes combinaisons de ceux-ci ; R représente respectivement un groupe alkyle, un groupe alcényle, un groupe alcynyle, un groupe aryle ou un groupe hétérocyclique, substitué ou non substitué, ou un atome d'halogène, un hydroxyle, un amino, un mercapto, un cyano, un sulfure, un carboxy ou un sel de celui-ci, un sulfo ou un sel de celui-ci, un hydroxylamino, un uréido ou un uréthane ; et m est un entier de 2 à 11.

5. Procédé selon la revendication 4, où D est un résidu hétérocyclique ayant une structure de cycle de 5 à 7 membres.

6. Procédé selon la revendication 4 ou 5, dans lequel la formule (1) est représentée par une formule (2) 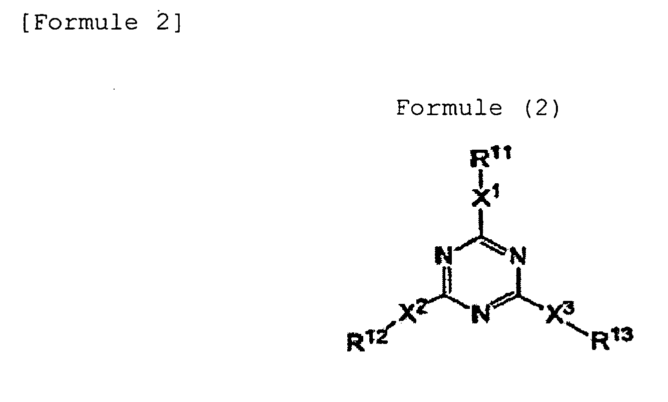 dans la formule (2), X¹, X² et X³ représentent respectivement une liaison simple ou un groupe de liaison bivalent choisi parmi le groupe consistant en NR¹ où R¹ est un atome d'hydrogène ou un groupe alkyle en C₁-C₃₀, un oxygène, un soufre, un carbonyle, un sulfonyle et toutes combinaisons de ceux-ci ; et R¹¹, R¹² et R¹³ représentent respectivement un groupe alkyle, un groupe alcényle, un groupe alcynyle, un groupe aryle ou un groupe hétérocyclique, substitué ou non substitué, ou un atome d'halogène, un hydroxyle, un amino, un mercapto, un cyano, un sulfure, un carboxy ou un sel de celui-ci, un sulfo ou un sel de celui-ci, un hydroxylamino, un uréido ou un uréthane.

7. Procédé selon l'une quelconque des revendications 4 à 6, dans lequel la formule (1) est représentée par une formule (3) 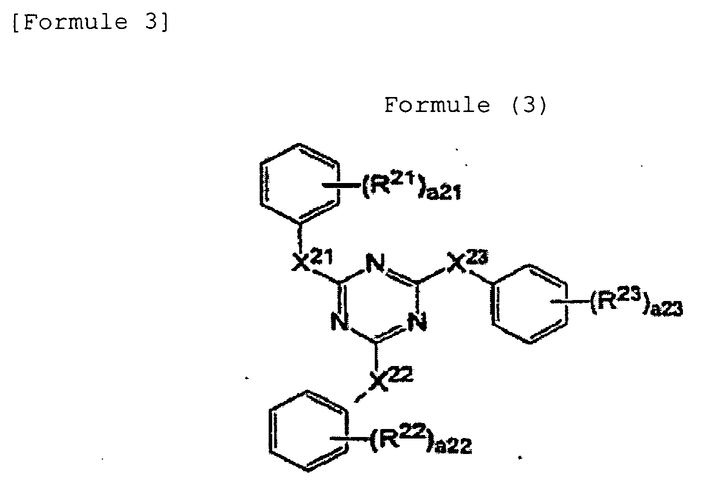 dans la formule (3), X²¹, X²² et X²³ représentent respectivement une liaison simple ou un groupe de liaison bivalent choisi parmi le groupe consistant en NR¹ où R¹ est un atome d'hydrogène ou un groupe alkyle en C₁-C₃₀, un oxygène, un soufre, un carbonyle, un sulfonyle et toutes combinaisons de ceux-ci ; R²¹, R²² et R²³ représentent respectivement un substituant ; et a21, a22 et a23 représentent respectivement un entier de 1 à 5.

8. Procédé selon l'une quelconque des revendications 1 à 7, pour réduire au moins un coefficient de frottement d'une surface d'un objet.

9. Article ayant une surface traitée produit conformément à un procédé selon l'une quelconque des revendications 1 à 8.
